# EUROPEAN PATENT SPECIFICATION

(11) **EP 4 032 621 B1**
(45) Date of publication and mention of the grant of the patent: **27.11.2024**
(21) Application number: 20864620.8
(22) Date of filing: 16.09.2020
(51) Int. Cl.: B05D 1/36, B05D 7/02, C08F 20/10, C09D 5/00, C09D 5/02, C09D 5/24, C08L 23/00, C08L 33/00, C09D 123/00, C09D 133/00, C09D 133/06, C09D 201/00, C08K 3/04, C09D 7/61

(54) **AQUEOUS WHITE CONDUCTIVE PRIMER COATING COMPOSITION AND METHOD OF FORMING MULTILAYERED COATING FILM USING SAME**
WÄSSRIGE, WEISSE LEITFÄHIGE GRUNDIERUNGSZUSAMMENSETZUNG UND VERFAHREN ZUM BILDEN EINES MEHRSCHICHTIGEN BESCHICHTUNGSFILMS UNTER VERWENDUNG DERSELBEN
COMPOSITION AQUEUSE DE REVÊTEMENT D'APPRÊT CONDUCTEUR BLANC ET PROCÉDÉ DE FORMATION DE FILM DE REVÊTEMENT MULTICOUCHES UTILISANT CELLE-CI

(30) Priority: 20.09.2019 JP 2019172015
(43) Date of publication of application: 27.07.2022
(73) Proprietor: Kansai Paint Co., Ltd, Amagasaki-shi, Hyogo 661-8555 (JP); Toyo Ink SC Holdings Co., Ltd., Tokyo 104-8377 (JP); TOYOCOLOR CO., LTD., Tokyo 104-8381 (JP)
(72) Inventor: HONDA, Takumu, Miyoshi-shi, Aichi 470-0206 (JP); ONO, Takayuki, Miyoshi-shi, Aichi 470-0206 (JP); TONOMURA, Hironori, Miyoshi-shi, Aichi 470-0206 (JP); NAHATA, Nobuyuki, Tokyo 104-8381 (JP)
(74) Representative: Zimmermann & Partner Patentanwälte mbB
(86) International application number: PCT/JP2020/035048
(87) International publication number: WO 2021/054352

(56) References cited:
- WO-A1-2005/012449
- WO-A1-2007/046532
- WO-A1-2016/121242
- WO-A1-2017/116547
- JP-A- 2004 075 735
- JP-A- 2006 219 521
- JP-A- 2006 232 884
- JP-A- 2015 051 621
- JP-A- 2016 084 423
- JP-A- 2017 066 321
- JP-A- 2020 019 924
- JP-A- 2020 180 185

## Description

### TECHNICAL FIELD

The present invention relates to an aqueous white conductive primer coating composition that can form a multilayer coating film excellent in conductivity and brightness on a plastic substrate such as an automobile bumper, and a method for forming a multilayer coating film using the same.

### BACKGROUND ART

In related arts, coating of a plastic substrate has been performed by spray coating such as air spraying or airless spraying, but in order to save energy and reduce discharge of harmful substances to the environment, electrostatic coating having excellent coating efficiency has been studied and adopted.

Since a plastic substrate generally has a high electrical resistance (generally, a surface resistivity of about 1 × 10¹² to 1 × 10¹⁶ Ω/□), it is extremely difficult to directly coat a surface of the plastic substrate with a coating material by electrostatic coating. Therefore, typically, it is necessary to perform electrostatic coating after imparting conductivity to the plastic substrate itself or the surface thereof.

For example, when a plastic substrate is electrostatically coated with a coating material, a conductive primer may be coated on the plastic substrate in order to impart conductivity to the substrate. As the conductive primer, a coating material containing a resin component and a conductive filler is generally used. Recently, from the viewpoint of environmental protection, it has been desired to use an aqueous coating material as the conductive primer coating material.

In an automobile bumper or the like, when a white pearl color is formed on a plastic substrate by using a conductive primer coating material, a base coating material, and a clear coating material, a white conductive primer coating material is usually used as the conductive primer coating material. In addition, a base coating material which contains a light interfering pigment and through which a white primer coating film in a lower layer can be seen is used as the base coating material, but from the viewpoint of the texture of the coating film, the white primer coating film may be required to be a white coating film having high brightness.

Patent Literature 1 discloses a white conductive primer coating material including: (a) 100 parts by weight of a resin mixture of a chlorinated polyolefin resin having a chlorine content of 10 wt% to 40 wt% and at least one modified resin selected from the group consisting of an acrylic resin, a polyester resin, and a polyurethane resin, (b) 5 to 50 parts by weight of a crosslinking agent, and (c) 10 to 250 parts by weight of a white conductive titanium dioxide powder which has a conductive layer containing tin oxide and phosphorus on a surface of titanium dioxide particles and in which a content of a metal element having an atomic value of 4 or less as an impurity is equal to or less than a specific amount.

Patent Literature 2 discloses a white conductive primer coating material obtained by blending 50 to 200 parts by weight of a white pigment (c) and 10 to 150 parts by weight of a mica pigment (d) coated with conductive metal oxide particles with 100 parts by weight of a total solid content of a chlorinated polyolefin (a) and another resin (b).

Patent Literature 3 discloses that a coating composition includes: (i) a film-forming resin; (ii) an infrared reflective pigment; and (iii) an infrared fluorescent pigment or dye different from the infrared reflective pigment. A multi-layer coating including the coating composition, and a substrate at least partially coated with the coating composition is also disclosed. A method of detecting an article at least partially coated with the coating composition is also disclosed.

### CITATION LIST

### PATENT LITERATURE

Patent Literature 1: WO 2005/012449
Patent Literature 2: JP-A-2004-75735
Patent Literature 3: WO 2017/116547 A1

### SUMMARY OF INVENTION

### TECHNICAL PROBLEM

However, the white conductive primer coating material described in Patent Literature 1 may have insufficient weather resistance.

In addition, the white conductive primer coating material described in Patent Literature 2 may be insufficient in brightness or may be insufficient in smoothness of a coating film to be formed.

Accordingly, an object of the present invention is to provide an aqueous white conductive primer coating composition that can form a coating film having high brightness and sufficient conductivity on a plastic substrate.

### SOLUTION TO PROBLEM

The present inventors have found that the above problems can be solved by an aqueous white conductive primer coating composition containing a binder component (A) and a carbon nanotube dispersion liquid (B), in which a coating film formed by the aqueous white conductive primer coating composition has an L* value of whiteness based on a CIE color-matching function of 80 or more and a surface resistivity of 10⁸ Ω/□ or less, and have completed the present invention.

That is, the present invention is as described in the appended claims.

### ADVANTAGEOUS EFFECTS OF INVENTION

An aqueous white conductive primer coating composition of the present invention contains a binder component (A) and a carbon nanotube dispersion liquid (B), and a coating film to be formed has an L* value of whiteness based on a CIE color-matching function of 80 or more and a surface resistivity of 10⁸ Ω/□ or less, whereby a coating film having high brightness and sufficient conductivity can be formed on a plastic substrate. As a result, when a coating film having a low shielding power is formed as an upper coating film of the coating film, a multilayer coating film having high brightness and/or high chroma can be formed. In addition, the coating film can be coated with a topcoat coating composition such as a colored coating material and/or a clear coating material by electrostatic coating excellent in coating efficiency, and useless coating composition which is not coated on an object to be coated can be reduced.

### DESCRIPTION OF EMBODIMENTS

An aqueous white conductive primer coating composition of the present invention (hereinafter, also simply referred to as "a coating composition of the present invention") contains: a binder component (A); and a carbon nanotube dispersion liquid (B), in which a coating film formed by the aqueous white conductive primer coating composition has an L* value of whiteness based on a CIE color-matching function of 80 or more and a surface resistivity of 10⁸ Ω/□ or less.

Hereinafter, the present invention will be described in more detail.

### <Binder component (A)>

The binder component (A) itself has film-forming properties, and may be either a non-crosslinked type or a crosslinked type, and among them, a crosslinked type is preferable. The binder component (A) contains at least one selected from an acrylic resin (A1) and a polyolefin resin (A2). As the binder component (A), a film-forming resin known per se which has been widely used as a binder component of a coating material can be used.

Examples of the film-forming resin include an acrylic resin, a polyolefin resin, a polyester resin, an alkyd resin, and a polyurethane resin. The film-forming resin preferably has a crosslinkable functional group such as a hydroxyl group, a carboxyl group, or an epoxy group. These may be used alone or in combination of two or more. Among these, at least one selected from an acrylic resin and a polyolefin resin is contained. Among these, it is more preferable to use an acrylic resin and a polyolefin resin in combination from the viewpoint of improving the adhesion and the appearance of the coating film.

As the binder component (A), a crosslinking agent can be used in addition to the film-forming resin. When the crosslinking agent is used as a part of the binder component (A), usually, a resin (base resin) that has a crosslinkable functional group such as a hydroxyl group, a carboxyl group, or an epoxy group and can form a crosslinked film by reacting with the crosslinking agent can be used as the film-forming resin. In the aqueous white conductive primer coating composition of the present invention, it is preferable to use a crosslinked coating material containing the base resin and a crosslinking agent from the viewpoint of water resistance of a coating film to be formed.

Examples of the kinds of the base resin include an acrylic resin, a polyolefin resin, a polyester resin, an alkyd resin, and a polyurethane resin. Among these, the base resin is preferably a hydroxyl group-containing resin, and more preferably a hydroxyl group-containing acrylic resin.

A blending ratio of the binder component (A) in the coating composition of the present invention can be changed depending on the application, usage form, and the like of the coating composition of the present invention, but from the viewpoint of conductivity, adhesion, and the like, the blending ratio is preferably 30 mass% to 70 mass%, more preferably 30 mass% to 60 mass%, still more preferably 35 mass% to 45 mass% based on the weight of a nonvolatile content of the coating composition.

When the acrylic resin and the polyolefin resin are contained, a mixing ratio of the acrylic resin and the polyolefin resin is preferably 10 mass% to 90 mass% of the acrylic resin and 90 mass% to 10 mass% of the polyolefin resin, and more preferably 20 mass% to 80 mass% of the acrylic resin and 80 mass% to 20 mass% of the polyolefin resin, based on the total of both from the viewpoint of improving the adhesion of the coating film and the appearance. The mixing ratio is based on the solid content weight.

In the present description, the term "(meth)acrylate" means acrylate or methacrylate, and "(meth)acrylic acid" means acrylic acid or methacrylic acid. The term "(meth)acryloyl" means acryloyl or methacryloyl, and the term "(meth)acrylamide" means acrylamide or methacrylamide. In addition, "(meth)acryl" means "acryl or methacryl".

### <<Acrylic resin (A1))>>

The acrylic resin (A1) is preferably an acrylic resin obtained by polymerizing a polymerizable unsaturated monomer, and more preferably a hydroxyl group-containing acrylic resin obtained by polymerizing a hydroxyl group-containing polymerizable unsaturated monomer and other polymerizable unsaturated monomers. In addition, it is preferable to have a carboxyl group for solubility in water, dispersibility, crosslinking, and the like. The polymerization method may be a common method.

The hydroxyl group-containing polymerizable unsaturated monomer is a compound having one or more hydroxyl groups and one or more polymerizable unsaturated bonds in one molecule. Examples of the hydroxyl group-containing polymerizable unsaturated monomer include a monoester of (meth)acrylic acid with divalent alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; an ε-caprolactone-modified product of the monoester of (meth)acrylic acid and divalent alcohol having 2 to 8 carbon atoms; N-hydroxymethyl(meth)acrylamide; allyl alcohol; and (meth)acrylate having a polyoxyethylene chain having a hydroxyl group at a molecular end.

Examples of other polymerizable unsaturated monomers include C₁₋₂₄ alkyl(meth)acrylates such as methyl(meth)acrylate, ethyl(meth)acrylate, n-propyl(meth)acrylate, isopropyl(meth)acrylate, n-butyl(meth)acrylate, isobutyl(meth)acrylate, tert-butyl(meth)acrylate, 2-ethylhexyl acrylate, n-octyl(meth)acrylate, lauryl(meth)acrylate, cyclohexyl(meth)acrylate, isobomyl(meth)acrylate, tridecyl(meth)acrylate, and stearyl(meth)acrylate; carboxyl group-containing polymerizable unsaturated monomers such as acrylic acid, methacrylic acid, maleic acid, and maleic anhydride; epoxy group-containing polymerizable unsaturated monomers such as glycidyl(meth)acrylate and 3,4-epoxycyclohexylmethyl(meth)acrylate; aminoalkyl(meth)acrylates such as N,N-dimethylaminoethyl(meth)acrylate, N,N-diethylaminoethyl(meth)acrylate, and N,N-dimethylaminopropyl(meth)acrylate; (meth)acrylamides or derivatives thereof such as acrylamide, methacrylamide, N,N-dimethylaminoethyl(meth)acrylamide, N,N-diethylaminoethyl(meth)acrylamide, N,N-dimethylaminopropyl(meth)acrylamide, N-methylolacrylamide, N-methylolacrylamide methyl ether, and N-methylolacrylamide butyl ether; acrylonitrile, methacrylonitrile, vinyl acetate, VEOVA monomer (manufactured by Shell Chemical Co., Ltd.), styrene, vinyltoluene, α-methylstyrene; and ultraviolet-rays absorbing or ultraviolet-rays stable polymerizable unsaturated monomers such as 2-(2'-hydroxy-5'-methacryloyloxyethylphenyl)-2H-benzotriazole, and 4-(meth)acryloyloxy-1,2,2,6,6-pentamethylpiperidine. These compounds may be used alone or in combination of two or more.

The polymerization method for polymerizing the polymerizable unsaturated monomer to obtain a copolymer is not particularly limited, and is a polymerization method known per se, for example, a bulk polymerization method, a solution polymerization method, a bulk-suspension two-stage polymerization method in which suspension polymerization is performed after bulk polymerization, in the presence of a radical polymerization initiator. Among these, a solution polymerization method can be suitably used.

Examples of the polymerization method by the solution polymerization method include a method in which the polymerizable unsaturated monomer is dissolved or dispersed in an organic solvent, and the resultant is heated in the presence of the radical polymerization initiator while stirring at a temperature of usually about 80°C to 200°C. A reaction time is usually about 1 hour to 24 hours.

As the acrylic resin (A1), an acrylic resin (A11) containing isobornyl acrylate and/or isobornyl methacrylate, preferably isobornyl acrylate in a total amount of 15 to 65 parts by mass, preferably 20 to 55 parts by mass, and more preferably 25 to 45 parts by mass as a total amount of the isobornyl acrylate and isobornyl methacrylate based on 100 parts by mass of the polymerizable unsaturated monomer, can be suitably used from the viewpoint of improving the appearance of the resulting coating film. The acrylic resin (A11) preferably further has a hydroxyl group, and more preferably has a hydroxyl group and a carboxyl group.

The acrylic resin (A1) usually has a number average molecular weight of about 2000 to 100,000, and preferably about 10,000 to 70,000.

In the present specification, the number average molecular weight and the weight average molecular weight are values calculated from a chromatogram measured by gel permeation chromatograph, based on the molecular weight of standard polystyrene. As the gel permeation chromatograph, "HLC8120GPC" (manufactured by Tosoh Corporation) is used. As the column, four columns of "TSKgel G-4000 HXL", "TSKgel G-3000 HXL", "TSKgel G-2500 HXL", and "TSKgel G-2000 HXL" (trade name, all manufactured by Tosoh Corporation) can be used, and the measurement can be carried out under conditions that a mobile phase is tetrahydrofuran, a measurement temperature is 40°C, a flow rate is 1 cc/min, and a detector is RI.

When the acrylic resin (A1) is the hydroxyl group-containing acrylic resin, the hydroxyl group-containing acrylic resin usually has a hydroxyl value of about 10 to 100 mgKOH/g, and preferably about 30 to 70 mgKOH/g. When the acrylic resin (A1) contains a carboxyl group, the acrylic resin (A1) has an acid value of about 10 to 100 mgKOH/g, and preferably about 20 to 50 mgKOH/g.

### <<Polyolefin resin (A2)>>

As the polyolefin resin used in the coating composition of the present invention, any of polyolefin and modified polyolefin can be used. Examples of the polyolefin include polyolefins obtained by (co)polymerizing one or more olefins having 2 to 10 carbon atoms, such as ethylene, propylene, butylene, and hexene. Examples of the modified polyolefin include an unsaturated carboxylic acid or acid anhydride modified product, an acrylic modified product, a chloride of the polyolefin, and a modified polyolefin obtained by combining these modifications.

As the polyolefin used in the coating composition of the present invention, a polyolefin containing propylene as a polymerization unit is particularly preferable, and a weight fraction of the propylene unit in the polyolefin is preferably in a range of generally 0.5 or more, particularly 0.6 to 1, and more particularly 0.7 to 0.95 from the viewpoint of compatibility with other components, adhesion of a formed coating film, and the like.

As the polyolefin, a polyolefin known per se can be used without particular limitation, but a polyolefin produced by (co)polymerizing olefins using a single-site catalyst as a polymerization catalyst is preferable from the viewpoint of narrow molecular weight distribution of the obtained polyolefin and excellent random copolymerizability and the like.

The single-site catalyst is a polymerization catalyst having a uniform active site structure (single-site), and among the single-site catalysts, a metallocene-based catalyst is particularly preferable. The metallocene-based catalyst can be prepared by combining a metallocene (bis(cyclopentadienyl)metal complex and derivative thereof), which is a transition metal compound of groups 4 to 6 or 8 or a rare earth transition metal compound of group 3 of a periodic table having at least one conjugated five-membered ring ligand, with an aluminoxane or boron-based co-catalyst for activating the metallocene, and an organoaluminum compound such as trimethylaluminum. The (co)polymerization of olefin can be carried out by, for example, continuously adding alkyl aluminum and metallocene while supplying an olefin such as propylene or ethylene and hydrogen to a reaction vessel in accordance with a method known per se.

The unsaturated carboxylic acid or acid anhydride-modified polyolefin can be produced, for example, by graft-polymerizing an unsaturated carboxylic acid or an acid anhydride thereof to a polyolefin in accordance with a method known per se. Examples of the unsaturated carboxylic acid or acid anhydride thereof that can be used for modification include aliphatic carboxylic acids having 3 to 10 carbon atoms and containing at least one, preferably one polymerizable double bond in one molecule, and specific examples thereof include (meth)acrylic acid, maleic acid, fumaric acid, itaconic acid, and maleic anhydride. Among these, maleic acid or acid anhydride thereof is particularly suitable. A graft polymerization amount of the unsaturated carboxylic acid or the acid anhydride thereof to the polyolefin can be changed depending on the physical properties desired for the modified polyolefin, but generally, the graft polymerization amount is suitably in a range of preferably 1 mass% to 20 mass%, more preferably 1.5 mass% to 15 mass%, and still more preferably 2 mass% to 10 mass% based on the solid content weight of the polyolefin.

The acrylic-modified polyolefin can be produced by graft-polymerizing at least one kind of acrylic unsaturated monomer to the polyolefin by a suitable method known per se. Examples of the acrylic unsaturated monomer that can be used for the acrylic modification include C₁₋₂₀ alkyl esters of (meth)acrylic acid such as methyl(meth)acrylate, ethyl(meth)acrylate, n-propyl(meth)acrylate, isopropyl(meth)acrylate, n-butyl(meth)acrylate, isobutyl(meth)acrylate, tert-butyl(meth)acrylate, n-hexyl(meth)acrylate, n-octyl(meth)acrylate, 2-ethylhexyl(meth)acrylate, nonyl(meth)acrylate, dodecyl(meth)acrylate, tridecyl(meth)acrylate, stearyl(meth)acrylate, and isostearyl(meth)acrylate; C₁₋₂₁ hydroxyalkyl esters of (meth)acrylic acid such as hydroxyethyl(meth)acrylate, hydroxypropyl(meth)acrylate, and hydroxybutyl(meth)acrylate; other (meth)acrylic monomers such as (meth)acrylic acid, glycidyl(meth)acrylate, (meth)acrylamide, and (meth)acrylonitrile; and styrene, and these may be used alone or in combination of two or more.

The acrylic modification of the polyolefin can be performed, for example, by first reacting an acrylic unsaturated monomer having reactivity with a carboxyl group in the unsaturated carboxylic acid or acid anhydride-modified polyolefin produced as described above, for example, glycidyl(meth)acrylate to introduce a polymerizable unsaturated group into the polyolefin, and then (co)polymerizing the acrylic unsaturated monomer alone or in combination of two or more kinds with the polymerizable unsaturated group. An amount of the acrylic unsaturated monomer to be used in the acrylic modification of the polyolefin can be changed depending on the physical properties desired for the modified polyolefin, but is generally preferably 30 mass% or less, more preferably 0.1 mass% to 20 mass%, and even more preferably 0.15 mass% to 15 mass%, based on the solid content weight of the modified polyolefin to be obtained, from the viewpoint of compatibility with other components, adhesion of the formed coating film, and the like.

The chlorinated polyolefin can be produced by chlorinating the polyolefin. Chlorination of polyolefin can be performed, for example, by blowing chlorine gas into an organic solvent solution or dispersion liquid of polyolefin or a modified product thereof, and a reaction temperature is preferably 50°C to 120°C. A chlorine content in the chlorinated polyolefin (solid content) can be changed depending on the physical properties desired for the chlorinated polyolefin, but is generally preferably 35 mass% or less, more preferably 10 mass% to 30 mass%, and even more preferably 12 mass% to 25 mass% based on the weight of the chlorinated polyolefin, from the viewpoint of the adhesion of the formed coating film.

The polyolefin used in the present invention usually has a melting point in a range of 30°C to 120°C, preferably 50°C to 110°C, and more preferably 70°C to 100°C, and a weight average molecular weight (Mw) in a range of 50,000 to 150,000, preferably 70,000 to 130,000, and more preferably 80,000 to 120,000, from the viewpoints of compatibility with other components, adhesion of the formed coating film to the polyolefin base material, interlayer adhesion to the topcoat coating film layer, and the like. The polyolefin or modified polyolefin (A) generally has an amount of heat of fusion of preferably 1 to 50 mJ/mg, particularly preferably 2 to 50 mJ/mg, from the viewpoint of adhesion of the formed coating film to the base material, interlayer adhesion to the topcoat coating film layer, and the like.

Here, the melting point and the amount of heat of fusion of the polyolefin or modified polyolefin are obtained by measuring the amount of heat at a temperature increase rate of 10°C/min using 20 mg of polyolefin or modified polyolefin with an inspection scanning calorimeter "DSC-5200" (trade name, manufactured by Seiko Instruments Inc.). The melting point of the polyolefin or modified polyolefin can be adjusted by changing a monomer composition of the polyolefin, particularly the amount of the α-olefin monomer. When it is difficult to determine the amount of heat of fusion, the amount of heat can be measured by the above method after the measurement sample is once heated to 120°C and then cooled to room temperature at 10°C/min.

The weight average molecular weight of the polyolefin or modified polyolefin is a value obtained by converting the weight average molecular weight measured by gel permeation chromatography based on the weight average molecular weight of polystyrene, and is measured using "HLC/GPC 150C" (manufactured by Water, 60 cm × 1) as a gel permeation chromatography apparatus and o-dichlorobenzene as a solvent at a column temperature of 135°C and a flow rate of 1.0 ml/min. An injection sample was prepared by dissolving 5 mg of polyolefin in 3.4 ml of o-dichlorobenzene at 140°C for 1 hour to 3 hours. As a column for gel permeation chromatography, "GMH_{HR}-H(S)HT" [trade name, manufactured by Tosoh Corporation] can be used. The number average molecular weight can also be determined in the same manner as described above. As the weight average molecular weight of the polyolefin or modified polyolefin, a catalog value of an olefin-based polymer manufacturer may be used.

Further, the polyolefin or modified polyolefin (A) used in the present invention generally has a ratio (Mw/Mn) of a weight average molecular weight to a number average molecular weight of preferably 1.5 to 7.0, more preferably 1.8 to 5.0, and still more preferably 2.0 to 4.0, from the viewpoint of compatibility with other components, adhesion of the formed coating film, and the like.

The polyolefin can be used after being diluted with an organic solvent, or can also be used in a form of an aqueous dispersion liquid.

Examples of the organic solvent for diluting the polyolefin include aromatic hydrocarbon solvents such as toluene, xylene, and benzene; alicyclic hydrocarbon solvents such as cyclopentane, methylcyclopentane, cyclohexane, methylcyclohexane, ethylcyclohexane, cyclooctane, and cyclonanone; ester solvents such as ethyl acetate and butyl acetate; ketone solvents such as methyl ethyl ketone and methyl isobutyl ketone; and alcohol solvents such as ethanol, isopropanol, and n-butanol, and these can be used alone or in combination of two or more.

The polyolefin can be dispersed in water by using an unsaturated carboxylic acid or acid anhydride-modified polyolefin as a raw material and neutralizing a part or all of carboxyl groups in the polyolefin with an amine compound and/or dispersing the polyolefin in water with an emulsifier. From the viewpoint of improving the water dispersibility, it is desirable to use neutralization and water dispersion with an emulsifier in combination.

Examples of the amine compound used for the neutralization include tertiary amines such as triethylamine, tributylamine, dimethylethanolamine, and triethanolamine; secondary amines such as diethylamine, dibutylamine, diethanolamine, and morpholine; and primary amines such as propylamine and ethanolamine.

When the amine compound is used, the amount of the amine compound to be used is preferably in a range of 0.1 to 1.0 molar equivalent to the carboxyl group in the unsaturated carboxylic acid or acid anhydride-modified polyolefin.

Examples of the emulsifier include nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonyl phenyl ether, polyoxyethylene octyl phenyl ether, polyoxyethylene monolaurate, polyoxyethylene monostearate, polyoxyethylene monooleate, sorbitan monolaurate, sorbitan monostearate, sorbitan trioleate, and polyoxyethylene sorbitan monolaurate; anionic emulsifiers such as sodium salts and ammonium salts of alkylsulfonic acid, alkylbenzenesulfonic acid, and alkylphosphoric acid; polyoxyalkylene group-containing anionic emulsifiers having an anionic group and a polyoxyalkylene group such as a polyoxyethylene group or a polyoxypropylene group in one molecule, and reactive anionic emulsifiers having the anionic group and a polymerizable unsaturated group in one molecule. These emulsifiers may be used alone or in combination of two or more.

The emulsifier can be typically used within a range of 1 to 20 parts by mass based on 100 parts by mass of the solid content of the unsaturated carboxylic acid or acid anhydride-modified polyolefin.

The thus obtained water dispersion of the unsaturated carboxylic acid or acid anhydride-modified polyolefin can be further obtained as a water dispersion of the acrylic-modified unsaturated carboxylic acid or acid anhydride-modified polyolefin by emulsion polymerization of an acrylic unsaturated monomer in the presence of the water-dispersed unsaturated carboxylic acid or acid anhydride-modified polyolefin, if necessary.

The polyester resin that can be used as the binder component (A) can be usually obtained by an esterification reaction between polybasic acid and polyhydric alcohol. The polybasic acid is a compound (including an anhydride) having two or more carboxyl groups in one molecule, and the polyhydric alcohol is a compound having two or more hydroxyl groups in one molecule, each of which can be used usually in this field. Furthermore, the polybasic acid and the polyhydric alcohol can be modified with a monobasic acid, a higher fatty acid, an oil component, or the like.

The polyester resin may have a hydroxyl group, and a hydroxyl group can be introduced by using tri- or higher-hydric alcohol in combination with dihydric alcohol. The polyester resin may have a carboxyl group together with a hydroxyl group, and generally has a weight average molecular weight in a range of about 1000 to 100,000, and preferably about 1500 to 70,000.

The crosslinking agent is a compound that can react with a crosslinkable functional group such as a hydroxyl group, a carboxyl group, or an epoxy group in the base resin to cure the coating composition of the present invention. Examples of the crosslinking agent include a polyisocyanate compound, a blocked polyisocyanate compound, an amino resin, a carbodiimide group-containing compound, an epoxy group-containing compound, an oxazoline compound, a carboxyl group-containing compound, a hydrazide group-containing compound, and a semicarbazide group-containing compound. Among these, a polyisocyanate compound that can react with a hydroxyl group, a blocked polyisocyanate compound and an amino resin, and a carbodiimide group-containing compound that can react with a carboxyl group are preferable, and a blocked polyisocyanate compound and an amino resin are particularly preferable. The crosslinking agent may be used alone or in combination of two or more kinds thereof.

The polyisocyanate compound is a compound having at least two isocyanate groups in one molecule, and examples thereof include an aliphatic polyisocyanate, an alicyclic polyisocyanate, an aromatic aliphatic polyisocyanate, an aromatic polyisocyanate, and a derivative of the polyisocyanate.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates such as 2-isocyanatoethyl 2,6-diisocyanatohexanoate, 1,6-diisocyanato-3-isocyanatomethyl hexane, 1,4,8-triisocyanatooctane, 1,6,11-triisocyanatoundecane, 1,8-diisocyanato-4-isocyanatomethyl octane, 1,3,6-triisocyanatohexane, and 2,5,7-trimethyl-1,8-diisocyanato-5-isocyanatomethyl octane.

Examples of the alicyclic polyisocyanate include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or a mixture thereof, methylenebis(4,1-cyclohexanediyl)diisocyanate (common name: hydrogenated MDI), and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of the aromatic aliphatic polyisocyanate include aromatic aliphatic diisocyanates such as methylene bis(4,1-phenylene)diisocyanate (common name: MDI), 1,3- or 1,4-xylylene diisocyanate or a mixture thereof, ω,ω'-diisocyanato-1,4-diethylbenzene, 1,3- or 1,4-bis(1-isocyanato-1-methylethyl)benzene (common name: tetramethylxylylene diisocyanate) or a mixture thereof; and aromatic aliphatic triisocyanates such as 1,3,5-triisocyanatomethylbenzene.

Examples of the aromatic polyisocyanate include aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI), 2,6-tolylene diisocyanate (common name: 2,6-TDI) or a mixture thereof, 4,4'-toluidine diisocyanate, and 4,4'-diphenyl ether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.

Examples of the derivative of the polyisocyanate include dimer, trimer, biuret, allophanate, uretdione, uretimine, isocyanurate, oxadiazine trione, polymethylene polyphenyl polyisocyanate (crude MDI, polymeric MDI), crude TDI, and the like of the polyisocyanate described above.

These polyisocyanates and derivatives thereof may be used alone or in combination of two or more thereof. Among these polyisocyanates, aliphatic diisocyanates, alicyclic diisocyanates, and derivatives thereof are preferable.

In addition, as the polyisocyanate compound, a prepolymer obtained by reacting the polyisocyanate and derivative thereof with a compound that can react with the polyisocyanate under the condition of excess isocyanate group may be used. Examples of the compound that can react with the polyisocyanate include compounds having an active hydrogen group such as a hydroxyl group and an amino group, and specific examples thereof include polyhydric alcohols, low molecular weight polyester resins, amines, and water.

As the polyisocyanate compound, a polymer of an isocyanate group-containing polymerizable unsaturated monomer, or a copolymer of the isocyanate group-containing polymerizable unsaturated monomer and a polymerizable unsaturated monomer other than the isocyanate group-containing polymerizable unsaturated monomer may be used.

As the polyisocyanate compound, a water-dispersible polyisocyanate compound is preferably used from the viewpoint of smoothness of the resulting coating film. As the water-dispersible polyisocyanate compound, any polyisocyanate compound that can be stably dispersed in an aqueous medium can be used without limitation, and among them, a hydrophilized polyisocyanate compound modified to be hydrophilic, a polyisocyanate compound to which water dispersibility is imparted by mixing a polyisocyanate compound and a surfactant in advance, and the like can be suitably used.

The polyisocyanate compound may be used alone or in combination of two or more thereof.

As the polyisocyanate compound, a commercially available product can be used. Examples of the commercially available product include "Bayhydur 3100" (trade name, manufactured by Sumika Covestro Urethane Co., Ltd., hydrophilic hexamethylene diisocyanurate).

The blocked polyisocyanate compound is a compound obtained by blocking an isocyanate group of the polyisocyanate compound with a blocking agent.

Examples of the blocking agent include phenol-based compounds such as phenol, cresol, xylenol, nitrophenol, ethylphenol, hydroxydiphenyl, butylphenol, isopropylphenol, nonylphenol, octylphenol, and methyl hydroxybenzoate; lactam-based compounds such as ε-caprolactam, δ-valerolactam, γ-butylolactam, and β-propiolactam; aliphatic alcohol-based compounds such as methanol, ethanol, propyl alcohol, butyl alcohol, amyl alcohol, and lauryl alcohol; ether-based compounds such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based compounds such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based compounds such as formaldehyde oxime, acetoamide oxime, acetooxime, methylethylketoxime, diacetylmonooxime, benzophenone oxime, and cyclohexane oxime; active methylene-based compounds such as dimethyl malonate, diethyl malonate, ethyl acetoacetate, methyl acetoacetate, and acetyl acetone; mercaptan-based compounds such as butylmercaptan, t-butylmercaptan, hexylmercaptan, t-dodecyl mercaptan, 2-mercaptobenzothiazole, thiophenol, methylthiophenol, and ethylthiophenol; acid amide-based compounds such as acetanilide, acetanisidide, acetotoluide, acrylamide, methacrylamide, acetate amide, stearate amide and benzamide; imide-based compounds such as succinimide, phthalimide, and maleimide; amine-based compounds such as diphenylamine, phenylnaphthylamine, xylidine, N-phenylxylidine, carbazole, aniline, naphthylamine, butylamine, dibutylamine, and butylphenylamine; imidazole-based compounds such as imidazole and 2-ethylimidazole; urea-based compounds such as urea, thiourea, ethyleneurea, ethylenethiourea, and diphenylurea; carbamic acid ester-based compounds such as phenyl N-phenylcarbamate; imine-based compounds such as ethyleneimine and propyleneimine; sulfite-based compounds such as sodium bisulfite and potassium bisulfite; and azole-based compounds. Examples of the azole-based compounds include pyrazole or pyrazole derivatives such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives such as imidazole, benzimidazole, 2-methylimidazole, 2-ethylimidazole, and 2-phenylimidazole; and imidazoline derivatives such as 2-methylimidazoline and 2-phenylimidazoline.

Among these, preferred examples of the blocking agent include an active methylene-based blocking agent, pyrazole, and a pyrazole derivative.

The blocking (reaction with a blocking agent) can be carried out by adding a solvent, if necessary. The solvent used for the blocking reaction is preferably one that is not reactive with the isocyanate group. Examples of the solvent include ketones such as acetone and methyl ethyl ketone, esters such as ethyl acetate, and solvents such as N-methyl-2-pyrrolidone (NMP).

As the blocked polyisocyanate compound, a water-dispersible blocked polyisocyanate compound is preferably used from the viewpoint of smoothness of the resulting coating film. As the water-dispersible blocked polyisocyanate compound, any blocked polyisocyanate compound that can be stably dispersed in an aqueous medium can be used without limitation, and among these, a hydrophilized blocked polyisocyanate compound modified to be hydrophilic, a blocked polyisocyanate compound to which water dispersibility is imparted by mixing a blocked polyisocyanate compound and a surfactant in advance, and the like can be suitably used.

The blocked polyisocyanate compound may be used alone or in combination of two or more thereof.

As the amino resin, a partially methylolated amino resin or a completely methylolated amino resin obtained by a reaction between an amino component and an aldehyde component can be used. Examples of the amino component include melamine, urea, benzoguanamine, acetoguanamine, steroguanamine, spiroguanamine, and dicyandiamide. Examples of the aldehyde component include formaldehyde, paraformaldehyde, acetaldehyde, and benzaldehyde.

A methylol group of the methylolated amino resin, which is partially or completely etherified with an appropriate alcohol, can also be used. Examples of the alcohol used for the etherification include methyl alcohol, ethyl alcohol, n-propyl alcohol, isopropyl alcohol, n-butyl alcohol, isobutyl alcohol, 2-ethylbutanol, and 2-ethylhexanol.

As the amino resin, a melamine resin is preferable. As the melamine resin, for example, an alkyl-etherified melamine resin obtained by partially or completely etherifying a methylol group of a partially or completely methylolated melamine resin with the alcohol can be used.

As the alkyl-etherified melamine resin, for example, a methyl-etherified melamine resin obtained by partially or completely etherifying a methylol group of a partially or completely methylolated melamine resin with methyl alcohol; a butyl-etherified melamine resin obtained by partially or completely etherifying a methylol group of a partially or completely methylolated melamine resin with butyl alcohol; a methyl-butyl mixed etherified melamine resin obtained by partially or completely etherifying a methylol group of a partially or completely methylolated melamine resin with methyl alcohol and butyl alcohol; and the like can be suitably used. Further, as these melamine resins, those in which an imino group coexists can also be used. These may be either hydrophobic or hydrophilic.

The weight average molecular weight of the melamine resin is preferably in a range of 400 to 6000, more preferably in a range of 500 to 4000, and still more preferably in a range of 600 to 2000.

As the melamine resin, a commercially available product can be used. Examples of commercially available product names include "CYMEL 202", "CYMEL 203", "CYMEL 238", "CYMEL 251", "CYMEL 303", "CYMEL 323", "CYMEL 324", "CYMEL 325", "CYMEL 327", "CYMEL 350", "CYMEL 385", "CYMEL 1156", "CYMEL 1158", "CYMEL 1116", and "CYMEL 1130" (all manufactured by Allnex Japan Inc.), "U-VAN 120", "U-VAN 20HS", "U-VAN 20SE60", "U-VAN 2021", "U-VAN 2028", and "U-VAN 28-60" (all manufactured by Mitsui Chemicals, Inc.).

The melamine resin described above may be used alone or in combination of two or more kinds thereof.

As the carbodiimide group-containing compound, a commercially available product can be used. Examples of the commercially available product include "Carbodilite SV-02", "Carbodilite V-02", "Carbodilite V-02-L2", "Carbodilite V-04", "Carbodilite E-01", and "Carbodilite E-02" (trade names, all manufactured by Nisshinbo Industries, Inc.).

The epoxy group-containing compound is a resin having two or more epoxy groups in one molecule. The epoxy group-containing compound is effective for crosslinking and curing an aqueous polyolefin-based resin, an aqueous acrylic-based resin, an aqueous polyester-based resin, an aqueous polyurethane-based resin, and the like, which have a carboxyl group.

The oxazoline compound is a hydrophilic compound effective for crosslinking and curing an aqueous polyolefin-based resin, an aqueous acrylic-based resin, an aqueous polyester-based resin, an aqueous polyurethane-based resin, and the like, which have a carboxyl group. As the hydrophilic oxazoline compound, a commercially available product can be used. Examples of the commercially available product include "Epocros WS-500" (trade name, manufactured by Nippon Shokubai Co., Ltd.).

When the coating composition of the present invention contains the crosslinking agent, the blending ratio of the base resin and the crosslinking agent is preferably 30 mass% to 95 mass%, more preferably 40 mass% to 90 mass%, and still more preferably 50 mass% to 80 mass% for the base resin, and is preferably 5 mass% to 70 mass%, more preferably 10 mass% to 60 mass%, and still more preferably 20 mass% to 50 mass% for the crosslinking agent, based on the total amount of the base resin and the crosslinking agent, from the viewpoint of improving smoothness and water resistance of the formed coating film.

### <Carbon nanotube dispersion liquid (B)) >

The blending ratio of the carbon nanotube dispersion liquid (B) in the coating composition of the present invention is preferably a blending ratio in which the content of the carbon nanotube (a) described later is preferably 0.01 to 1 part by mass, more preferably 0.02 to 0.5 part by mass, and still more preferably 0.03 to 0.3 part by mass based on 100 parts by mass of the solid content of the binder component (A), from the viewpoint of conductivity, brightness of the coating film, and the like.

The carbon nanotube dispersion liquid (B) in the present invention is preferably a carbon nanotube dispersion liquid (B1) satisfying the following (1) to (4).
(1) a carbon nanotube (a), a water-soluble resin (b), and water are contained;
(2) the carbon nanotube (a) is a single-walled carbon nanotube, and has an average outer diameter of 0.5 nm to 5 nm and a specific surface area of 400 m²/g to 800 m²/g in image analysis using a transmission electron microscope;
(3) the water-soluble resin (b) is contained in an amount of 400 parts by mass or more and 2000 parts by mass or less based on 100 parts by mass of a carbon component of the carbon nanotube (a); and
(4) the carbon nanotube dispersion liquid has a 50% particle diameter (D50 diameter) of 1.5 µm to 40 µm as calculated by laser diffraction particle size distribution measurement.

### <Carbon nanotube (a)>

The carbon nanotube (a) used in the present invention may be either a single-walled carbon nanotube or a multi-walled carbon nanotube, but is preferably a single-walled carbon nanotube from the viewpoint of conductivity. The single-walled carbon nanotube has a shape in which planar graphite is wound in a cylindrical shape, and has a structure in which one layer of graphite is wound.

The average outer diameter of the carbon nanotube (a) is preferably 0.5 nm to 5 nm, more preferably 1 nm to 3 nm, and still more preferably 1 nm to 2 nm. The average outer diameter of the carbon nanotube (a) is determined by observing the shape of the carbon nanotubes with a transmission electron microscope (manufactured by JEOL Ltd.), measuring the lengths of short axes of 100 carbon nanotubes, and taking the number average value as the average outer diameter (nm) thereof.

The specific surface area of the carbon nanotube (a) is preferably 400 to 800 m²/g, and more preferably 400 to 600 m²/g. When the specific surface area is 400 m²/g or more, a network of carbon nanotubes is easily formed in the coating film, and the conductivity is improved. In addition, when the specific surface area is 800 m²/g or less, the energy required to dissolve the carbon nanotubes in the dispersion step can be reduced, the progress of structural destruction of the carbon nanotubes can be prevented, and the conductivity can be improved.

The carbon component of the carbon nanotube (a) is preferably 70% to 90%, and more preferably 80% to 90%. When the carbon component is in the range of 70% to 90%, an aggregation force of the carbon nanotubes is weak, the adsorption of the water-soluble resin (b) easily proceeds, and a carbon nanotube dispersion liquid having excellent storage stability and conductivity can be obtained.

The carbon nanotube (a) may contain a catalyst component, and a value obtained by subtracting the catalyst component from the carbon nanotube (a) is referred to as a carbon component. The value of the carbon component is calculated by measuring an ash content after firing in the air at 900°C for 5 hours according to the formula (1). Carbon component of carbon nanotube (%) = [1 - {ash weight (g) after firing/carbon nanotube weight (g) before firing}] × 100

The carbon nanotube (a) has a 50% particle diameter (D50) of preferably 500 µm to 1300 µm, more preferably 800 µm to 1200 µm, and still more preferably 900 µm to 1100 µm, which is calculated by laser diffraction particle size distribution measurement. In the present specification, the 50% particle diameter (D50) refers to a value calculated by the laser diffraction particle size distribution measurement unless otherwise specified.

Examples of such carbon nanotube (a) include, but are not limited to, single-walled carbon nanotubes such as ZEONANO SG101 (outer diameter: 3 nm to 5 nm) manufactured by Zeon Corporation and TUBALL (80%) (outer diameter: 1 nm to 2 nm) manufactured by OCSiAl Corporation.

### <Water-soluble resin (b)>

The water-soluble resin (b) represents a water-soluble resin that functions as a dispersant that promotes wetting of the carbon nanotubes in the dispersion step and contributes to dispersion stabilization. The water-soluble resin (b) is not particularly limited, but preferred examples thereof include the following compounds.

Examples of the water-soluble resin (b) include water-soluble polymer compounds such as alginic acids, polyvinyl alcohol, hydroxypropyl cellulose, carboxymethyl cellulose, hydroxyethyl cellulose, methyl cellulose, polyvinyl pyrrolidone, and gum arabic; ethylenic double bond-containing resins such as styrene-acrylic acid resin, styrene-methacrylic acid resin, styrene-acrylic acid-acrylic acid ester resin, styrene-maleic acid resin, styrene-maleic acid ester resin, methacrylic acid-methacrylic acid ester resin, acrylic acid-acrylic acid ester resin, isobutylene-maleic acid resin, vinyl-ester resin, and rosin-modified maleic acid resin; and amine-based resins such as polyallylamine, polyvinylamine, and polyethyleneimine.

Examples of the commercially available resin type dispersant that can be used as the water-soluble resin (b) include Disperbyk-180, 183, 184, 187, 190, 191, 192, 193, 194, 2010, 2013, 2015, 2090, 2091, 2095, 2096, and the like manufactured by BYK Chemie; SOLSPERSE-20000, 27000, 41000, 41090, 43000, 44000, 46000, 47000, 53095, 54000, and the like manufactured by Lubrizol Japan Ltd.; Dispex AA4030, AA4040, AA4140, CX4230, CX4231, CX4234, CX4240, CX4320, Dispex Ultra FA4404, FA4416, FA4425, FA4431, FA4437, FA4480, FA4483, PA4550, PA4560, PA4575, PA4585, and the like manufactured by BASF Japan Ltd.; Joncryl HPD-196, HPD-96J, PDX-6137A, 63J, 60J, 70J, JDX-6639, JDX-6500, PDX-6102B, and the like; and Adisper PA111, PB711, PB821, PB822, PB824, and the like manufactured by Ajinomoto Fine-Techno Co. Inc.

The water-soluble resin (b) is preferably ionic, more preferably a resin having an acidic functional group such as polyacrylic acid, preferably have a styrene structure, and still more preferably have a styrene-acrylic structure, for reasons of compatibility with the binder component (A) and the high total light transmittance and conductivity of the coating material. The water-soluble resin (b) preferably has an acid value, more preferably has a solid acid value of 10 to 250 mgKOH/g, and even more preferably 10 to 100 mgKOH/g. This is because when the content is within the above range, the dispersion stability is excellent due to the interaction with the carbon nanotube (a). The water-soluble resin (b) may have an amine value.

A preferred embodiment of the water-soluble resin (b) is a resin having a styrene-acrylic structure and an acid value of 10 to 250 mgKOH/g. Another preferred embodiment is a resin having an acid value of 10 to 100 mgKOH/g.

Here, the solid acid value of the water-soluble resin (b) is a value obtained by converting the acid value (mgKOH/g) measured in accordance with a potentiometric titration method of JIS K 0070 (1992) into a solid content.

The solid content amine value of the water-soluble resin (b) is a value obtained by converting the total amine value (mgKOH/g) measured in accordance with the method of ASTM D 2074 (2013) into a solid content.

The carbon nanotube dispersion liquid may contain a surfactant in the dispersion liquid. Examples of the ionic surfactant include a cationic surfactant, an amphoteric surfactant, and an anionic surfactant. Examples of the cationic surfactant include an alkylamine salt and a quaternary ammonium salt. Examples of the amphoteric surfactant include an alkylbetaine-based surfactant and an amine oxide-based surfactant. Examples of the anionic surfactant include aromatic sulfonic acid-based surfactants such as an alkylbenzene sulfonate including dodecylbenzene sulfonic acid, and a dodecylphenyl ether sulfonate, monosoap-based anionic surfactants, ether sulfate-based surfactants, phosphate-based surfactants, and carboxylic acid-based surfactants. Among these, one containing an aromatic ring, that is, an aromatic ionic surfactant is preferable, and an aromatic ionic surfactant such as an alkylbenzene sulfonate, a dodecylphenyl ether sulfonate, or a naphthalene sulfonate is particularly preferable, because of excellent dispersibility, dispersion stability, and high concentration.

Examples of the nonionic surfactant include sugar ester-based surfactants such as sorbitan fatty acid ester and polyoxyethylene sorbitan fatty acid ester; fatty acid ester-based surfactants such as polyoxyethylene resin acid ester and polyoxyethylene fatty acid diethyl; ether-based surfactants such as polyoxyethylene alkyl ether, polyoxyethylene alkyl phenyl ether, and polyoxyethylene/polypropylene glycol; and aromatic nonionic surfactants such as polyoxyalkylene octyl phenyl ether, polyoxyalkylene nonyl phenyl ether, polyoxyalkyldibutyl phenyl ether, polyoxyalkylstyryl phenyl ether, polyoxyalkylbenzyl phenyl ether, polyoxyalkylbisphenyl ether, and polyoxyalkylcumyl phenyl ether. In the above description, the alkyl may be an alkyl having 1 to 20 carbon atoms. The surfactant is preferably a nonionic surfactant, and particularly preferably polyoxyethylene phenyl ether, which is an aromatic nonionic surfactant, from the viewpoint of excellent dispersibility, dispersion stability, and high concentration.

### <Preparation of carbon nanotube dispersion liquid (B)>

The carbon nanotube dispersion liquid (B) in the present invention is obtained by dispersing the carbon nanotube (a) in water using the water-soluble resin (b) as a dispersant. In this case, the water-soluble resin (b) and the carbon nanotube (a) are simultaneously or sequentially added and mixed, whereby the water-soluble resin (b) is dispersed while acting (adsorbing) on the carbon nanotube (a). However, in order to more easily produce the carbon nanotube dispersion liquid, it is more preferable to dissolve, swell, or disperse the water-soluble resin (b) in water, and then add and mix the carbon nanotube (a) in the liquid to cause the water-soluble resin (b) to act (adsorb) on the carbon nanotube (a).

As a dispersing device, a disperser commonly used for pigment dispersion or the like can be used. Examples thereof include, but are not limited to, a media type disperser such as a mixer including a disper, a homomixer, and a planetary mixer; a homogenizer (such as "CLEARMIX" manufactured by M Technique Co., Ltd. and "FILMIX" manufactured by PRIMIX Corporation, and "Abramix" manufactured by Silverson Co., Ltd.); a paint conditioner (manufactured by Red Devil, Inc); a colloid mill (such as "PUC colloid mill" manufactured by PUC and "colloid mill NM" manufactured by IKA); a cone mill (such as "Cone mill MKO" manufactured by IKA); a ball mill; a sand mill (such as "DYNO-MILL" manufactured by Shinmaru Enterprises Corporation); an attritor, a pearl mill (such as "DCP mill" manufactured by Eirich), and a coball mill; and a medialess disperser such as a wet jet mill (such as "Genus PY" manufactured by Genus Corporation, "STAR BURST" manufactured by Sugino Machine Limited, and "Nanomizer" manufactured by Nanomizer Inc.); "CLEAR SS5" manufactured by M Technique Co., Ltd., and "MICROS" manufactured by Nara Machinery Co., Ltd.; and other roll mills.

The 50% particle diameter (D50) of the carbon nanotube (a) after dispersion is preferably 1.5 µm to 40 µm, more preferably 4 µm to 40 µm, still more preferably 4 µm to 30 µm, and particularly preferably 4 µm to 20 µm. In general, the smaller the D50 is, the higher the dispersibility is, and it is better to disperse the carbon nanotubes in an isolated manner, but it is preferable to disperse the carbon nanotubes in the above range from the viewpoint of conductivity and transparency. When D50 is 1.5 µm or more and 40 µm or less, conductivity and transparency can be improved.

The content of the water-soluble resin (b) in the carbon nanotube dispersion liquid (B) is preferably 400 parts by mass or more and 2000 parts by mass or less, and more preferably 800 parts by mass to 1200 parts by mass based on 100 parts by mass of the carbon component of the carbon nanotube (a). When the content of the water-soluble resin (b) is 400 parts by mass or more, the compatibility with the binder component (A) can be improved, and when the content is 2000 parts by mass or less, the conductivity can be improved.

Furthermore, in the method for producing the carbon nanotube dispersion liquid (B), it is important to maintain a certain average length of the carbon nanotube (a). Specifically, the average length of the carbon nanotube (a) after dispersion in the carbon nanotube dispersion liquid (B) is preferably 2 µm or more and 10 µm or less, and more preferably 5 µm or more and 10 µm or less. When the average length is 2 µm or more, the conductivity can be improved, and when the average length is 10 µm or less, the compatibility with the binder component (A) can be improved. The average length of the carbon nanotube (a) is determined by observing the shape of the carbon nanotubes with a transmission electron microscope (manufactured by JEOL Ltd.), measuring the length of long axes of 100 carbon nanotubes, and taking the number average value as the average length (µm) of the carbon nanotubes.

Further, assuming that the average length of the carbon nanotube (a) after dispersion is A and the average length before dispersion is B, A/B is preferably 0.3 or more. When A/B is 0.3 or more, the length of the carbon nanotube (a) is less likely to change, defects in the graphene structure on the surface of the carbon nanotube (a) are reduced, and the conductivity can be improved.

The viscosity of the carbon nanotube dispersion liquid (B) is preferably 8000 to 30,000 mPa·s, and more preferably 10,000 to 20,000 mPa·s at a B-type viscometer rotor rotation speed of 60 rpm.

A concentration of the carbon nanotube in the solution in the carbon nanotube dispersion liquid is preferably 0.1% to 1%, and more preferably 0.3% to 0.7%.

### <Pigment>

The coating composition of the present invention further contains a titanium oxide pigment (C). The content of the pigment is from 50 to 250 parts by mass, preferably from 100 to 200 parts by mass, and more preferably from 125 to 175 parts by mass, based on 100 parts by mass of the total solid content of the binder component (A), from the viewpoint of brightness, adhesion, water resistance, and the like of the formed coating film.

Examples of the pigment include a coloring pigment, an extender pigment, a bright pigment, and a conductive pigment. In particular, the coating composition of the present invention preferably contains a coloring pigment as at least one of the pigments.

Examples of the coloring pigment include titanium oxide [hereinafter also referred to as a titanium oxide pigment (C)], zinc oxide, carbon black, molybdenum red, Prussian blue, cobalt blue, an azo pigment, a phthalocyanine pigment, a quinacridone pigment, an isoindoline pigment, a threne-based pigment, and a perylene pigment, and among them, at least the titanium oxide pigment (C) is used.

Examples of the extender pigment include clay, kaolin, barium sulfate, barium carbonate, calcium carbonate, talc, silica, and alumina white, and among them, barium sulfate and/or talc is preferably used.

Examples of the bright pigment include aluminum (including vapor-deposited aluminum), copper, zinc, brass, nickel, aluminum oxide, mica, aluminum oxide coated with titanium oxide or iron oxide, mica coated with titanium oxide or iron oxide, a glass flake, and a hologram pigment. These bright pigments may be used alone or in combination of two or more kinds thereof. An aluminum pigment includes non-leafing aluminum and leafing aluminum, both of which can be used.

The conductive pigment is not particularly limited as long as the conductive pigment can impart conductivity to the coating film to be formed, and may have any shape of a particle shape, a flake shape, and a fiber (including whisker) shape. Examples of the conductive pigment include carbon powders such as conductive carbon black and graphite, and metal powders such as silver, nickel, copper, and aluminum, as well as tin oxide doped with antimony, tin oxide doped with phosphorus, needle-shaped titanium oxide coated with tin oxide/antimony, antimony oxide, zinc antimonate, indium tin oxide, pigments obtained by coating a whisker surface of carbon or graphite with tin oxide or the like; pigments obtained by coating a mica flake surface with at least one conductive metal oxide selected from the group consisting of tin oxide, antimony-doped tin oxide, tin-doped indium oxide (ITO), fluorine-doped tin oxide (FTO), phosphorus-doped tin oxide, and nickel oxide; and conductive pigments containing tin oxide and phosphorus on a titanium dioxide particle surface. These may be used alone or in combination of two or more.

In particular, in the coating composition of the present invention, a titanium oxide pigment (C), is used as a pigment, and the average particle diameter thereof is preferably 0.05 µm to 2 µm, and particularly preferably 0.1 µm to 1 µm, from the viewpoint of design and chemical resistance.

The content of the titanium oxide pigment (C) in the coating composition of the present invention is 50 to 250 parts by mass, preferably 100 to 200 parts by mass, and more preferably 125 to 175 parts by mass based on 100 parts by mass of the solid content of the binder component (A).

### <Ionic Liquid>

The coating composition of the present invention may contain an ionic liquid. The ionic liquid used in the coating composition of the present invention encompasses a molten salt that is in a liquid state at room temperature. A normal salt is typically solid at room temperature, but a molten salt is a salt in which a specific cation and an anion are ionically bonded to each other, and becomes liquid at room temperature. Here, the room temperature means a temperature of about 20°C, and the vicinity of the room temperature means a temperature of about 10°C to about 40°C.

Such an ionic liquid contains various combinations of ionic bonds of one or more cations and one or more anions, and as the cation species, a cation having at least one onium salt structure selected from an ammonium salt, a phosphonium salt, and a sulfonium salt is particularly preferable.

Examples of the ionic liquid include a combination of a quaternary ammonium cation having a nitrogen-containing heterocyclic structure having an alkyl chain such as imidazolium, pyridinium, pyrrolidinium, pyrazolidinium, isothiazolidinium, and isooxazolidinium, or a cation such as an aliphatic ammonium cation, a phosphonium cation, and a sulfonium cation, and an anion derived from tetrafluoroboric acid, hexafluorophosphoric acid, tris(trifluoromethylsulfonyl)nitric acid, tris(trifluoromethylsulfonyl)carbonic acid, trifluoromethylsulfonylimide, an organic carboxylic acid, halogen, or the like. Here, examples of the organic carboxylic acid include lactic acid, and the halogen includes fluorine, chlorine, bromine and iodine.

Specific examples of the ionic liquid include 1,2-dimethylimidazolium tetrafluoroborate, tetrabutylammonium bromide, hexadecyltributylphosphonium bromide, 1-butyl-3-methylimidazolium hexafluorophosphate, N-hexylpyridinium tetrafluoroborate, 1-ethyl-3-methylimidazolium tetrafluoroborate, 1-hexyl-3-methylimidazolium tetrafluoroborate, 1-ethyl-3-methylimidazolium bis(trifluoromethylsulfonyl)imide, 1-butyl-3-methylimidazolium bis(trifluoromethylsulfonyl)imide, 1-ethyl-3-methylimidazolium triflate, 1-ethyl-3-methylimidazolium chloride, N-butylpyridinium chloride, N,N-di ethyl-N-methyl-(2-methoxyethyl)ammonium tetrafluoroborate, N,N-diethyl-N-methyl-(2-methoxyethyl)ammonium bis(trifluoromethylsulfonyl)imide, 1-ethyl-3-methylimidazolium-(L)-lactate, and 1-butyl-3-methylimidazolium-(L)-lactate.

It is generally desirable to use a colorless and transparent ionic liquid, but the ionic liquid may be colored in a range that does not affect the color of the formed coating film. The ionic liquid may be soluble in water or poorly soluble or insoluble in water, but it is preferable to selectively use the ionic liquid depending on the form or the like of the coating composition of the present invention.

The blending ratio of the ionic liquid in the coating composition of the present invention can be changed depending on the application, usage form, and the like of the coating composition of the present invention, but from the viewpoint of conductivity, adhesion, water resistance, and the like, the blending ratio can be generally in a range of 0.5 mass% to 20 mass%, preferably 0.75 mass% to 15 mass%, and more preferably 1 mass% to 10 mass% based on the mass of a nonvolatile content of the coating composition.

The coating composition of the present invention can be prepared by dissolving or dispersing each of the components described above in an organic solvent, water, or a mixture thereof by a known method to adjust the solid content to preferably 10 mass% to 80 mass%. Since the coating composition of the present invention is of an aqueous type, VOC can be reduced. As for the organic solvent, one used in the production of each component may be used as it is, or may be added as appropriate.

Examples of the organic solvent that can be used in the coating composition of the present invention include ketone-based organic solvents such as methyl ethyl ketone and methyl isobutyl ketone; ester-based organic solvents such as ethyl acetate and butyl acetate; ether-based organic solvents such as ethylene glycol monobutyl ether; alcohol-based organic solvents such as isopropyl alcohol, n-butyl alcohol and isobutyl alcohol; aliphatic hydrocarbon-based organic solvents such as n-heptane and n-hexane; aromatic hydrocarbon-based organic solvents such as toluene and xylene; and other organic solvents such as N-methyl-pyrrolidone.

### <Method of applying coating composition>

Examples of a substrate to which the coating composition of the present invention is applied include various plastic substrates. As a material of the plastic substrate, for example, a polyolefin obtained by polymerizing at least one olefin having 2 to 10 carbon atoms such as ethylene, propylene, butylene, and hexene is particularly preferable, but the material is not limited thereto, and may be a material such as polycarbonate, an ABS resin, a urethane resin, and nylon. These plastic substrates can be appropriately subjected to a degreasing treatment, a water washing treatment, or the like in advance by a method known per se.

The plastic substrate is not particularly limited, and specific examples thereof include various plastic members used for an automobile exterior portion such as a bumper, a spoiler, a grille, and a fender, an exterior portion of a household electric appliance, and the like.

The coating of the coating composition of the present invention can be formed by coating using a known coating method. Examples of the coating method include air spray coating, airless spray coating, rotary atomization coating, and curtain coat coating. A thickness of the coating film is usually in a range of about 10 µm to 50 µm, preferably about 15 µm to 45 µm, and more preferably about 20 µm to 40 µm as a thickness of a cured film.

The coating film of the coating composition of the present invention is left to stand at room temperature, pre-heated, or heat-cured to form an uncured or cured coating film having a surface resistivity of 10⁸ Ω/□ or less. When the surface resistivity is 10⁸ Ω/□ or less, electrostatic coating of a topcoat coating composition such as a colored coating composition and/or a clear coating composition can be performed on the coating film.

As a means for pre-heating or heat-curing the coating film after coating of the coating composition of the present invention, a known heating means can be used, and examples thereof include air blow, infrared heating, far infrared heating, induction heating, and dielectric heating. If necessary, the plastic substrate may be heated.

The coating composition of the present invention can form a coating film having a high whiteness of 80 or more as brightness (L* value) based on an L*a*b* color system defined in JIS Z8781-4 (2013). The L* value in the present specification is defined as a numerical value calculated from a spectral reflectance received at 90° with respect to a coating film surface with irradiation light at 45° with respect to a vertical axis of the coating film surface using a spectrophotometer CM512m3 (trade name, manufactured by Konica Minolta, Inc.). The brightness can be measured as follows. That is, the brightness (L* value) of a coating film obtained by spray-coating a plastic substrate with the coating composition so as to have a cured film thickness of about 30 µm and then heat-curing the coating composition at a temperature of about 80°C to 120°C for about 20 minutes to 40 minutes can be measured using the spectrophotometer.

Examples of the method for forming a multilayer coating film using the coating composition of the present invention include the following method I for forming a multilayer coating film by 3-coat-1-bake. By the method for forming a multilayer coating film, a multilayer coating film having high brightness and high texture can be formed on a surface of the plastic substrate.

The method I for forming a multilayer coating film includes the following steps (1) to (4).
(1) Coating a plastic substrate with the coating composition of the present invention to form an uncured white conductive primer layer
   The step (1) is a step of forming an uncured white conductive primer layer by coating the plastic substrate with the coating composition of the present invention so as to have a cured film thickness of usually about 10 µm to 50 µm, preferably about 15 µm to 45 µm, and more preferably about 20 µm to 40 µm.
(2) Electrostatically coating the white conductive primer layer with an interference color base coating composition to form an uncured interference color base layer
   The step (2) is a step of forming an uncured interference color base layer by electrostatically coating the uncured white conductive primer layer formed in the step (1) with the interference color base coating composition so as to have a cured film thickness of usually about 5 µm to 30 µm, and preferably about 10 µm to 25 µm.
(3) Electrostatically coating the interference color base layer with a clear coating composition to form an uncured clear layer
   The step (3) is a step of forming an uncured clear layer by electrostatically coating the uncured interference color base layer formed in the step (2) with the clear coating composition so as to have a cured film thickness of usually about 5 µm to 50 µm, and preferably about 10 µm to 40 µm.
(4) Simultaneously baking the coating films of three layers formed by the steps (1) to (3)

The step (4) is a step of simultaneously heating and curing the coating films of three layers formed in the steps (1) to (3).

In the method I for forming a multilayer coating film, the primer coating composition, the interference color base coating composition, and the clear coating composition may be left to stand or pre-heated, if necessary. The leaving to stand is usually performed at room temperature for about 1 minute to 20 minutes. The pre-heating is usually performed by heating at a temperature of about 40°C to 120°C for about 1 minute to 20 minutes.

The heat curing of the three-layer coating film composed of the primer coating composition, the interference color base coating composition and the clear coating composition can be usually performed by heating at a temperature of about 60°C to 140°C for about 10 minutes to 60 minutes. The thermal curing is preferably performed at a temperature of about 80°C to 120°C for about 10 minutes to 40 minutes.

After the coating of each coating composition, the coating composition may be left to stand or pre-heated as necessary. The leaving to stand is usually performed at room temperature for about 1 minute to 20 minutes. The pre-heating is usually performed by heating at a temperature of about 40 °C to 120°C for about 1 minute to 20 minutes.

As the interference color base coating material composition in the above method I, any coating composition known per se as an interference color base coating material for a topcoat base coating can be used. For example, a coating composition obtained by dissolving or dispersing a base resin having a crosslinkable functional group, a crosslinking agent, and a light interfering pigment in water and/or an organic solvent can be suitably used.

Examples of the crosslinkable functional group contained in the base resin include a carboxyl group and a hydroxyl group. Examples of the type of the base resin include an acrylic resin, a polyester resin, an alkyd resin, a urethane resin, and an epoxy resin. Examples of the crosslinking agent include a polyisocyanate compound, a blocked polyisocyanate compound, a melamine resin, and a urea resin.

As the light interfering pigment, for example, a pigment obtained by coating a translucent base material such as natural mica, artificial mica, alumina flake, silica flake, or glass flake with a metal oxide can be used.

The metal oxide-coated mica pigment is a pigment in which natural mica or artificial mica is used as a base material and a surface of the base material is coated with metal oxide. The natural mica is a scaly base material obtained by pulverizing mica ore, and artificial mica is synthesized by heating industrial raw materials such as SiO₂, MgO, Al₂O₃, K₂SiF₆, and Na₂SiF₆ to melt at a high temperature of about 1500°C, and cooling and crystallizing. Compared with natural mica, the artificial mica contains less impurities and has a uniform size and thickness. Specifically, fluorine-based mica, potassium tetrasilicon mica, sodium tetrasilicon mica, Na teniolite, LiNa teniolite, and the like are known. Examples of the coating metal oxide include titanium oxide and iron oxide. The coating metal oxide can develop an interference color.

A metal oxide-coated alumina flake pigment is a pigment in which an alumina flake is used as a base material and a surface of the base material is coated with metal oxide. The alumina flake refers to scaly (flaky) aluminum oxide, which is colorless and transparent. The aluminum oxide does not have to be a single component of the alumina flake, and the alumina flake may contain an oxide of another metal. The metal oxide-coated alumina flake pigment develops an interference color by the coating metal oxide. Examples of the coating metal oxide include titanium oxide and iron oxide.

A metal oxide-coated silica flake pigment is obtained by coating scaly silica, which is a base material having a smooth surface and a uniform thickness, with metal oxide having a refractive index different from that of the base material. The metal oxide-coated silica flake pigment develops an interference color by the coating metal oxide. Examples of the coating metal oxide include titanium oxide and iron oxide.

The metal oxide-coated glass flake pigment is obtained by coating a scaly glass substrate with a metal oxide. Since a surface of the substrate is smooth, strong light reflection occurs and a grainy feeling is exhibited. The metal oxide-coated glass flake pigment develops an interference color by the coating metal oxide. Examples of the coating metal oxide include titanium oxide and iron oxide.

The interfering pigment may be subjected to a surface treatment for improving dispersibility, water resistance, chemical resistance, weather resistance, and the like. The interfering pigment may be used alone or in combination of two or more thereof.

The interference color base coating composition used in the method of the present invention contains an interfering pigment in a range of, for example, 1 to 80 parts by mass, and preferably 2 to 60 parts by mass, based on 100 parts by mass of the total resin solid content of the interference color base coating composition.

The interference color base coating composition may further contain other pigments as long as the whiteness is not significantly reduced. Examples of the other pigments include inorganic or organic solid color pigments such as titanium oxide, carbon black, zinc white, cadmium red, molybdenum red, chrome yellow, chromium oxide, Prussian blue, cobalt blue, an azo pigment, a phthalocyanine pigment, a quinacridone pigment, an isoindoline pigment, a threne pigment, and a perylene pigment. The pigment may be used alone or in combination of two or more kinds thereof.

The interference color base coating composition may further contain additives for various coating materials as necessary.

As the clear coating composition in the method I for forming a multilayer coating film, any coating material known per se as the coating composition for topcoat clear coating can be used. For example, a coating composition obtained by dissolving or dispersing a base resin having a crosslinkable functional group and a crosslinking agent in water and/or an organic solvent can be suitably used.

Examples of the crosslinkable functional group contained in the base resin include a carboxyl group and a hydroxyl group. Examples of the kind of the base resin include an acrylic resin, a polyester resin, an alkyd resin, a urethane resin, and an epoxy resin. Examples of the crosslinking agent include a polyisocyanate compound, a blocked polyisocyanate compound, a melamine resin, and a urea resin.

In the clear coating composition, a coloring pigment, a bright pigment, an extender pigment, a dye, an ultraviolet absorber, a light stabilizer, a surface conditioner, and the like may be appropriately blended as necessary to such an extent that transparency is not impaired.

Examples of the method for forming a multilayer coating film using the coating composition of the present invention include the following methods II to IV for forming a multilayer coating film. In any of the methods, the use of the coating composition of the present invention in a lower layer makes it possible to achieve high brightness and to broaden options of the color of an upper layer.

Method II for forming a multilayer coating film: a method further including the following step (1a) between the step (1) and the step (2) in the method I for forming a multilayer coating film.

(1a) A step of coating the white conductive primer layer with an aqueous white non-conductive primer coating composition to form an uncured white non-conductive primer layer.

In the step (1a), the aqueous white non-conductive primer coating composition is usually applied so as to have a cured film thickness of about 5 µm to 50 µm, and preferably about 10 µm to 40 µm. The aqueous white non-conductive primer coating composition refers to a primer coating composition that can form an uncured or cured coating film having a surface resistivity exceeding 10⁸ Ω/□ by leaving the coating film to stand alone at room temperature, pre-heating, or heat-curing the coating film. As the aqueous white non-conductive primer coating composition, for example, a primer coating composition obtained by dissolving or dispersing a base resin having a crosslinkable functional group, a crosslinking agent, and a white pigment in water can be suitably used.

The L* value of the multilayer coating film formed of the white conductive primer layer and the white non-conductive primer layer on the plastic substrate is preferably 81 or more, more preferably 85 or more, and particularly preferably 90 or more. By the method for forming a multilayer coating film, a multilayer coating film having interference properties that has extremely high brightness and high texture can be formed on the surface of the plastic substrate.

Method III for forming a multilayer coating film: a method including the following step (2a) instead of the step (2) in the method I for forming a multilayer coating film.

(2a) A step of electrostatically coating the white conductive primer layer with an aqueous white base coating material composition to form an uncured white base layer.

As the aqueous white base coating material composition, any coating composition known per se as a white base coating material for a topcoat base coating can be used. For example, a coating composition obtained by dissolving or dispersing a base resin having a crosslinkable functional group, a crosslinking agent, and a white pigment in water and/or an organic solvent can be suitably used.

The L* value of the multilayer coating film formed of the white conductive primer layer and the white base layer on the plastic substrate is preferably 81 or more, more preferably 85 or more, and particularly preferably 90 or more. By the method for forming a multilayer coating film, a white multilayer coating film having extremely high brightness can be formed on the surface of the plastic substrate.

Method IV for forming a multilayer coating film: a method including the following step (2b) instead of the step (2) in the method I for forming a multilayer coating film.

(2b) A step of electrostatically coating the white conductive primer layer with an aqueous high chroma base coating composition to form an uncured high-saturation base layer.

In the step (2b), an aqueous high chroma base coating composition is usually applied so as to have a cured film thickness of about 5 µm to 50 µm, and preferably about 10 µm to 40 µm. The aqueous high chroma base coating composition is a coating composition that can form a coating film having high chroma such as red. The chroma of a coating film having a cured film thickness of 15 µm applied on a white coating film of the aqueous high chroma base coating composition having an L* value of 80 is 20 or more, preferably 30 or more, and particularly preferably 40 or more in terms of a C* value.

The C* value is a chroma (C* value) based on the L*a*b* color system defined in JIS Z8781 to 4 (2013). The C* value is defined as a numerical value calculated from a spectral reflectance received at 90° with respect to a coating film surface with irradiation light at 45° with respect to a vertical axis of the coating film surface using a spectrophotometer CM512m3 (trade name, manufactured by Konica Minolta, Inc.).

### [Examples]

The present invention is described more specifically below by referring to Production Examples, Examples and Comparative Examples. However, the present invention is not limited thereto. In each example, "parts" and "%" are based on mass unless otherwise specified. A thickness of the coating film is based on a cured coating film.

### <Binder component (A)>

### <Preparation of acrylic resin (A1)>

### <<Production of acrylic resin (A11)>>

Into a reaction vessel equipped with a stirrer, a thermometer, a reflux condenser and the like, 40 parts of ethylene glycol monobutyl ether and 30 parts of isobutyl alcohol were charged, the mixture was heated and stirred, and after reaching 100°C, a mixture of the following monomers and the like was added dropwise over 3 hours.

Styrene: 10 parts
Methyl methacrylate: 18 parts
Isobornyl acrylate: 35 parts
n-butyl acrylate: 10 parts
2-hydroxyethyl methacrylate: 20 parts
Acrylic acid: 7 parts
2,2'-azobisisobutyronitrile: 1 part
Isobutyl alcohol: 5 parts

After the completion of the dropwise addition, the temperature was further maintained at 100°C for 30 minutes, and then an additional catalyst solution, which is a mixture of 0.5 parts of 2,2'-azobisisobutyronitrile and 10 parts of ethylene glycol monobutyl ether, was added dropwise over 1 hour. After the mixture was further stirred at 100°C for 1 hour, the mixture was cooled, 15 parts of isobutyl alcohol was added, 4 parts of N,N-dimethylaminoethanol was added when the temperature reached 75°C, and the mixture was stirred for 30 minutes to obtain an acrylic resin (A11-1) solution having a solid content of 50%. The acrylic resin (A11-1) had a hydroxyl value of 86 mgKOH/g, an acid value of 54.5 mgKOH/g, and a number average molecular weight of 22,000.

### <<Production of acrylic resin (A12)>>

Into a reaction vessel equipped with a stirrer, a thermometer, a reflux condenser and the like, 40 parts of ethylene glycol monobutyl ether and 30 parts of isobutyl alcohol were charged, the mixture was heated and stirred, and after reaching 100°C, a mixture of the following monomers and the like was added dropwise over 3 hours.

Styrene: 10 parts
Methyl methacrylate: 38 parts
n-butyl acrylate: 25 parts
2-hydroxyethyl methacrylate: 20 parts
Acrylic acid: 7 parts
2,2'-azobisisobutyronitrile: 1 part
Isobutyl alcohol: 5 parts

After the completion of the dropwise addition, the temperature was further maintained at 100°C for 30 minutes, and then an additional catalyst solution, which is a mixture of 0.5 parts of 2,2'-azobisisobutyronitrile and 10 parts of ethylene glycol monobutyl ether, was added dropwise over 1 hour. After the mixture was further stirred at 100°C for 1 hour, the mixture was cooled, 15 parts of isobutyl alcohol was added, 4 parts of N,N-dimethylaminoethanol was added when the temperature reached 75°C, and the mixture was stirred for 30 minutes to obtain an acrylic resin (A12-1) solution having a solid content of 50%. The acrylic resin (A12-1) had a hydroxyl value of 86 mgKOH/g, an acid value of 54.5 mgKOH/g, and a number average molecular weight of 20,000.

### <<Polyolefin resin (A2)>>

Aqueous polyolefin-based resin (A2-1): melting point: 80°C, weight average molecular weight (Mw): 80,000
Aqueous polyolefin-based resin (A2-2): melting point: 95°C, weight average molecular weight (Mw): 90,000

### <<Polyester resin>>

Esterification reaction was carried out by a common method using trimethylolpropane, cyclohexanedimethanol, isophthalic acid, and adipic acid. Number average molecular weight: 4500, hydroxyl value: 120, acid value: 10

### <<Melamine resin>>

An imino group-containing methylbutyl mixed etherified melamine having a weight average molecular weight of 1200.

### <<Blocked polyisocyanate compound (E)>>

A compound in which hexamethylene diisocyanate is fully blocked with dimethyl malonate.

### <Preparation of carbon nanotube dispersion liquid (B)>

### <<Carbon nanotube (a)>>

TUB ALL (80%): single-walled carbon nanotube manufactured by OCSiAl, average outer diameter: 1.5 nm, carbon component: 80%, average length: 12 µm, 50% particle diameter (D50): 920 µm, specific surface area: 490 m²/g, single-walled
·TUBALL (93%): single-walled carbon nanotube manufactured by OCSiAl, average outer diameter: 1.5 nm, carbon component: 93%, average length: 10 µm, 50% particle diameter (D50): 1010 µm, specific surface area: 850 m²/g, single wall
·Carbon nanotube (a-1): average outer diameter: 1.5 nm, carbon component: 70%, average length: 8 µm, 50% particle diameter (D50): 1190 µm, specific surface area: 750 m²/g, single-walled
·Carbon nanotube (a-2): average outer diameter: 1.5 nm, carbon component: 91%, average length: 9 µm, 50% particle diameter (D50): 1350 µm, specific surface area: 1200 m²/g, single-walled

The carbon nanotubes (a-1) and (a-2) were produced according to the following Production Examples.

### <<<Production of carbon nanotube (a-1)>>>

An iron metal having a thickness of 1 nm was deposited on a silicon wafer using a sputter deposition apparatus. This was inserted into a reaction furnace, and reacted in an argon hydrogen mixed gas at 1000 cc/min and an ethylene gas at 100 cc/min for 10 minutes after raising the temperature to 800°C under an argon atmosphere to recover the carbon nanotubes. Further, a stainless-steel container was charged with carbon nanotubes and glass beads, and a dry grinding treatment was performed for 1 hour with a paint conditioner to adjust a length of the carbon nanotubes to a predetermined length, thereby obtaining carbon nanotubes (a-1).

### <<<Production of carbon nanotube (a-2)>>>

An iron metal having a thickness of 1 nm was deposited on a silicon wafer using a sputter deposition apparatus. This was inserted into a reaction furnace, and reacted in an argon hydrogen mixed gas at 1000 cc/min and an ethylene gas at 100 cc/min for 10 minutes after raising the temperature to 1000°C under an argon atmosphere to recover the carbon nanotubes. Further, a stainless-steel container was charged with carbon nanotubes and glass beads, and a dry grinding treatment was performed for 1 hour with a paint conditioner to adjust a length of the carbon nanotubes to a predetermined length, thereby obtaining carbon nanotubes (a-2).

### <<Water-soluble resin (b)>>

·Joncryl HPD-96J: manufactured by BASF Japan Ltd., styrene-acrylic acid-based, solid acid value: 240 mgKOH/g, non-volatile content: 34%
·Joncryl JDX-6500: manufactured by BASF Japan Ltd., all acrylic (styrene-free), solid acid value: 215 mgKOH/g, non-volatile content: 29.5%
·Dispex Ultra PA4550: manufactured by BASF Japan Ltd., modified polyacrylate polymer, solid acid value: 0 mgKOH/g, solid amine value: 54 mg KOH/g, non-volatile content: 50%
·BYK-190: manufactured by BYK company, styrene-based block copolymer, solid acid value: 25 mgKOH/g, non-volatile content: 40%
·BYK-2010: manufactured by BYK company, acrylic emulsion, solid acid value: 50 mgKOH/g, solid amine value: 50 mgKOH/g, non-volatile content: 40%

The 50% particle diameter (D50) of the carbon nanotubes used in the present invention was calculated by a laser diffraction particle size distribution ("SALD-2300" manufactured by Shimadzu Corporation), and the specific surface area was calculated by a full-automatic specific surface area measuring apparatus ("HM Model-1200" manufactured by Mountech Co., Ltd.).

### <<Production of carbon nanotube dispersion liquid (B)>>

### <<<Carbon nanotube dispersion liquid B-1>>>

0.5 parts of TUBALL as the carbon nanotube (a), 4.7 parts of Joncryl JPD-96J as the water-soluble dispersing resin (b), 0.3 parts of Surfynol 104E as an antifoaming agent, and 94.5 parts of purified water were preliminarily dispersed with a spatula, then 200 g of zirconia beads having a diameter of 0.5 mm were charged as a dispersion medium, and the mixture was subjected to a dispersion treatment with a paint shaker for 4 hours to obtain a carbon nanotube dispersion liquid B-1.

### <<<Carbon nanotube dispersion liquids B-2 to B-13 and B-15 to B-33>>>

Carbon nanotube dispersion liquids B-2 to B-13 and B-15 to B-33 were obtained in the same manner as in the case of the carbon nanotube dispersion liquid B-1 except that the kind and amount of the water-soluble resin (b) shown in Table 1 and a dispersion treatment time were changed.

### <<<Carbon nanotube dispersion liquid B-14>>>

A carbon nanotube dispersion liquid B-14 was obtained in the same manner as in the case of the carbon nanotube dispersion liquid B-7 except that 0.04 parts of "Demol N" (manufactured by Kao Corporation, sodium salt of β-naphthalenesulfonic acid formalin condensate) was added as a surfactant.

### <<Evaluation of carbon nanotube dispersion liquid (B)>>

The obtained carbon nanotube dispersion liquid was evaluated as follows. The results are shown in Tables 1 and 2.

### (Viscosity)

A viscosity value was measured immediately after the dispersion liquid was sufficiently stirred with a spatula using a B-type viscometer ("BL" manufactured by Toki Sangyo Co., Ltd.) at a dispersion liquid temperature of 25°C and a B-type viscometer rotor rotation speed of 60 rpm. The rotor used for the measurement was No.1 when the viscosity value was less than 0.1 Pa s, No.2 when the viscosity value was 0.1 Pa s or more and less than 0.5 Pa·s, No.3 when the viscosity value was 0.5 Pa·s or more and less than 2.0 Pa·s, and No.4 when the viscosity value was 2.0 Pa·s or more and less than 10 Pa·s. When the obtained viscosity value was 10 Pa's or more, it was described as "> 10", which indicates that the viscosity was too high to be evaluated by the B-type viscometer used for evaluation. The viscosity measured within 5 hours from immediately after the dispersion was defined as an initial viscosity.

### (Particle size distribution of dispersion liquid)

As for the particle size distribution of the carbon nanotube (a) of the dispersion liquid, the 50% particle diameter (D50) was calculated by a laser diffraction type particle size distribution ("Microtrac MT300II" manufactured by MicrotracBEL Corporation).

**Table 1**

| Carbon nanotube dispersion liquid | Initial viscosity (Pa·s) | 50% particle diameter (µm) | Carbon nanotube (a) | | | | | Water-soluble resin (b) | | | Dispersion treatment time (hour) |
|---|---|---|---|---|---|---|---|---|---|---|---|
| | | | Kind | Structure | Average outer diameter (nm) | Specific surface area | Content (%) | Kind | Solid content (g) | Parts by mass of water-soluble resin (b) based on 100 parts by mass of carbon component of carbon nanotube (a) | |
| B-1 | 1.9 | 4.1 | TUB ALL (80%) | Single-walled | 1.5 | 490 | 0.5 | Joncryl HPD-96J | 1.6 | 400 | 4 |
| B-2 | 3.3 | 6.9 | TUB ALL (80%) | Single-walled | 1.5 | 490 | 0.5 | Joncryl HPD-96J | 3.2 | 800 | 4 |
| B-3 | 4.4 | 12.0 | TUB ALL (80%) | Single-walled | 1.5 | 490 | 0.5 | Joncryl HPD-96J | 6.4 | 1600 | 4 |
| B-4 | 2.3 | 3.4 | TUB ALL (80%) | Single-walled | 1.5 | 490 | 0.5 | Joncryl HPD-96J | 3.2 | 800 | 8 |
| B-5 | 0.9 | 2.8 | TUB ALL (80%) | Single-walled | 1.5 | 490 | 0.5 | Joncryl HPD-96J | 3.2 | 800 | 12 |
| B-6 | 3.3 | 1.5 | TUB ALL (80%) | Single-walled | 1.5 | 490 | 0.5 | Joncryl JDX-6500 | 3.2 | 800 | 4 |
| B-7 | 1.2 | 17.5 | TUB ALL (80%) | Single-walled | 1.5 | 490 | 0.5 | BYK-190 | 3.2 | 800 | 4 |
| B-8 | 0.7 | 13.2 | TUB ALL (80%) | Single-walled | 1.5 | 490 | 0.5 | BYK-2010 | 3.2 | 800 | 4 |
| B-9 | 1.3 | 7.7 | TUB ALL (80%) | Single-walled | 1.5 | 490 | 0.5 | Dispex Ultra PA 4550 | 3.2 | 800 | 4 |
| B-10 | 0.2 | 4.5 | TUB ALL (80%) | Single-walled | 1.5 | 490 | 0.15 | BYK-190 | 0.96 | 800 | 4 |
| B-11 | 0.6 | 6.1 | TUB ALL (80%) | Single-walled | 1.5 | 490 | 0.3 | BYK-190 | 1.92 | 800 | 4 |
| B-12 | 1.5 | 24.4 | TUB ALL (80%) | Single-walled | 1.5 | 490 | 0.6 | BYK-190 | 3.84 | 800 | 4 |
| B-13 | 5.3 | 31.0 | TUB ALL (80%) | Single-walled | 1.5 | 490 | 1.0 | BYK-190 | 6.4 | 800 | 4 |
| B-14 | 1.0 | 15.0 | TUB ALL (80%) | Single-walled | 1.5 | 490 | 0.5 | BYK-190 | 3.2 | 800 | 4 |
| B-15 | 2.2 | 2.5 | Carbon nanotube (a-1) | Single-walled | 1.5 | 750 | 0.5 | Joncryl JDX-6500 | 3.2 | 800 | 4 |
| B-16 | 2.9 | 3.6 | Carbon nanotube (a-1) | Single-walled | 1.5 | 750 | 0.5 | BYK-190 | 3.2 | 800 | 4 |
| B-17 | 3.5 | 4.4 | Carbon nanotube (a-1) | Single-walled | 1.5 | 750 | 0.5 | Joncryl HPD-96J | 3.2 | 800 | 4 |

**Table 2**

| Carbon nanotube dispersion liquid | Initial viscosity (Pa·s) | 50% particle diameter (µm) | Carbon nanotube (a) | | | | | Water-soluble resin (b) | | | Dispersion treatment time (hour) |
|---|---|---|---|---|---|---|---|---|---|---|---|
| | | | Kind | Structure | Average outer diameter (nm) | Specific surface area | Content (%) | Kind | Solid content (g) | Parts by mass of water-soluble resin (b) with respect to 100 parts by mass of carbon component of carbon nanotube (a) | |
| B-18 | 0.6 | 0.8 | TUB ALL (80%) | Single-walled | 1.5 | 490 | 0.5 | Joncryl HPD-96J | 0.4 | 100 | 4 |
| B-19 | 0.8 | 1.7 | TUB ALL (80%) | Single-walled | 1.5 | 490 | 0.5 | Joncryl HPD-96J | 0.8 | 200 | 4 |
| B-20 | >10 | 45.0 | TUB ALL (80%) | Single-walled | 1.5 | 490 | 0.5 | Joncryl HPD-96J | 12 | 3000 | 4 |
| B-21 | 2.0 | 1.2 | TUB ALL (80%) | Single-walled | 1.5 | 490 | 0.5 | Joncryl JDX-6500 | 0.8 | 200 | 4 |
| B-22 | 1.8 | 3.8 | TUB ALL (80%) | Single-walled | 1.5 | 490 | 0.5 | BYK-190 | 0.8 | 200 | 4 |
| B-23 | 0.9 | 2.2 | TUB ALL (80%) | Single-walled | 1.5 | 490 | 0.5 | BYK-2010 | 0.8 | 200 | 4 |
| B-24 | 2.7 | 2.1 | TUB ALL (80%) | Single-walled | 1.5 | 490 | 0.5 | Dispex Ultra PA 4550 | 0.8 | 200 | 4 |
| B-25 | 3.6 | 3.2 | TUB ALL (93%) | Single-walled | 1.5 | 850 | 0.5 | Joncryl HPD-96J | 4.16 | 800 | 4 |
| B-26 | 2.9 | 3.9 | TUB ALL (93%) | Single-walled | 1.5 | 850 | 0.5 | Joncryl JDX-6500 | 4.16 | 800 | 4 |
| B-27 | 0.8 | 5.3 | TUB ALL (93%) | Single-walled | 1.5 | 850 | 0.5 | BYK-190 | 4.16 | 800 | 4 |
| B-28 | 1.0 | 2.8 | TUB ALL (93%) | Single-walled | 1.5 | 850 | 0.5 | BYK-2010 | 4.16 | 800 | 4 |
| B-29 | 1.1 | 4.6 | TUB ALL (93%) | Single-walled | 1.5 | 850 | 0.5 | Dispex Ultra PA 4550 | 4.16 | 800 | 4 |
| B-30 | 3.0 | 4.5 | Carbon nanotube (a-2) | Single-walled | 1.5 | 1200 | 1.65 | Dispex Ultra PA 4551 | 4.16 | 800 | 4 |
| B-31 | 4.1 | 4.8 | Carbon nanotube (a-2) | Single-walled | 1.5 | 1200 | 2.65 | Dispex Ultra PA 4552 | 4.16 | 800 | 4 |
| B-32 | 3.4 | 51.2 | TUB ALL (80%) | Single-walled | 1.5 | 490 | 0.5 | Joncryl HPD-96J | 3.2 | 800 | 1 |
| B-33 | 1.3 | 0.8 | TUB ALL (80%) | Single-walled | 1.5 | 490 | 0.5 | Joncryl HPD-96J | 3.2 | 800 | 20 |

### <Production of aqueous white conductive primer coating composition>

In addition to the binder component (A) and the carbon nanotube dispersion liquid (B) described above, the following materials were used as materials of the aqueous white conductive primer coating composition.
·Titanium oxide (C-1): trade name "TI-PURE R-706", manufactured by KEMMERS Co., Ltd., rutile titanium oxide
·Titanium oxide (C-2): trade name "JR-806", manufactured by Tayca Corporation, rutile titanium oxide
·Conductive titanium oxide: trade name "ET-500W", manufactured by Ishihara Sangyo Kaisha, Ltd., white conductive titanium oxide
·Conductive mica: trade name "Iriotec 7310", manufactured by Merck Ltd.
·Ionic liquid: trade name "CIL-313", manufactured by Japan Carlit Co., Ltd.

The above components were mixed in a blending ratio shown in Table 1 below (the carbon nanotube dispersion liquid (B) represents parts by mass of the solid content of the carbon nanotube (a), and the components other than the carbon nanotube dispersion (B) represent parts by mass of the solid content), and the mixture was sufficiently stirred with a mixer to obtain various aqueous white conductive primers.

### <Preparation of test coated sheet>

Each coating composition prepared as described above was applied to a polypropylene sheet (degreased) by air spray coating so as to have a cured film thickness of 30 µm. The obtained coated coating film was left to stand at room temperature for 3 minutes for setting, and was then pre-heated at 60°C for 3 minutes to form a white primer layer.

Next, the uncured white primer layer was electrostatically coated with "WBC-713T No.062" (aqueous interference color base coating material, manufactured by Kansai Paint Co., Ltd.) so as to have a cured film thickness of 15 µm, left to stand at room temperature for 2 minutes for setting, and then pre-heated at 80°C for 3 minutes to form an interference color base coat layer. Subsequently, the uncured white primer layer was electrostatically coated with "Soflex 7175" (acrylic resin-urethane resin-based thermosetting clear coating, manufactured by Kansai Paint Co., Ltd.) as a clear coating composition so as to have a cured film thickness of 25 µm, left to stand at room temperature for 7 minutes for setting, and then dried by heating at 120°C for 30 minutes to prepare a test coated sheet.

### <Evaluation of aqueous white conductive primer coating composition>

Each of the test coated sheets produced as described above was subjected to the following performance test. The results are shown in Table 2.

### (1) Surface resistivity of primer coating film surface

A primer coating film formed by spray-coating a black polypropylene sheet (degreased) with each of the coating compositions prepared as described above so as to have a cured film thickness of 30 µm was left to stand at room temperature for 3 minutes for setting, was then pre-heated at 60°C for 3 minutes, and then the surface resistivity (Ω/□) of each coating film surface was measured at 20°C by "MODEL 150" (manufactured by TREK). A indicates that the surface resistivity is less than 10⁶ (Ω/□), B indicates that the surface resistivity is 10⁶ (Q/o) or more and 10⁸ (Q/o) or less, and C indicates that the surface resistivity is more than 10⁸ (Ω/□).

### (2) Brightness (L* value)

A primer coating film formed by spray-coating a black polypropylene sheet (degreased) with each of the coating compositions prepared as described above so as to have a cured film thickness of 30 µm was left to stand at room temperature for 3 minutes for setting, and was then pre-heated at 60°C for 3 minutes. Next, after heating at 120°C for 30 minutes, each test coated sheet was irradiated with light from an angle of 45° with respect to an axis perpendicular to the coating film surface using a multi-angle spectrophotometer "CM-512m3" (manufactured by Konica Minolta, Inc.), and the brightness L* value of light in a direction perpendicular to the coating film surface among the reflected light was measured. A indicates that the L* value is 83 or more, B indicates that the L* value is 80 or more and less than 83, and C indicates that the L* value is less than 80.

### (3) Weather resistance

Each of the test coated sheets prepared as described above was subjected to an accelerated weather resistance test using a "super xenon weather meter" (manufactured by Suga Test Instruments Co., Ltd., weather resistance tester) under the conditions of a test piece wetting cycle of 18 minutes/2 hours and a black panel temperature of 61°C to 65°C in accordance with JIS K5600-7-7. Next, when an irradiation time of a lamp reached 1000 hours, an appearance of the test coated sheet was visually evaluated. A indicates that there is no abnormality in the appearance, and C indicates that there is an abnormality in the appearance.

**Table 3**

| | | | | Example | | | | | | | | | | | | | | |
|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 |
| Binder component (A) | Base resin | Acrylic resin (A1) | Acrylic resin (A11-1) | 20 | 20 | | 20 | 30 | 20 | 20 | 20 | 20 | 20 | 20 | 20 | 20 | 20 | 20 |
| | | | Acrylic resin (A12-1) | | 20 | 20 | | | | | | | | | | | | |
| | | Polyester resin | | 20 | | 20 | 20 | 15 | 20 | 20 | 20 | 20 | 20 | 20 | 20 | 20 | 20 | 20 |
| | Polyolefin resin (A2) | | Polyolefin resin (A2-1) | 25 | 25 | 25 | | 20 | 25 | 25 | 25 | 25 | 25 | 25 | 25 | 25 | 25 | 25 |
| | | | Polyolefin resin (A2-2) | | | | 25 | | | | | | | | | | | |
| | Crosslinking agent | Blocked polyisocyanate compound | | 20 | 20 | 20 | 15 | 20 | 35 | | 20 | 20 | 20 | 20 | 20 | 20 | 20 | 20 |
| | | Melamine resin | | 15 | 15 | 15 | 20 | 15 | | 35 | 15 | 15 | 15 | 15 | 15 | 15 | 15 | 15 |
| | B-1 | | | | | | | | | | | | 0.1 | | | | | |
| | B-2 | | | | | | | | | | | | | 0.1 | | | | |
| | B-3 | | | | | | | | | | | | | | 0.1 | | | |
| | B-4 | | | | | | | | | | | | | | | 0.1 | | |
| | B-5 | | | | | | | | | | | | | | | | 0.1 | |
| | B-6 | | | | | | | | | | | | | | | | | 0.1 |
| | B-7 | | | 0.1 | 0.1 | 0.1 | 0.1 | 0.1 | 0.1 | 0.1 | 0.08 | 0.15 | | | | | | |
| | B-8 | | | | | | | | | | | | | | | | | |
| | B-9 | | | | | | | | | | | | | | | | | |
| | B-10 | | | | | | | | | | | | | | | | | |
| | B-11 | | | | | | | | | | | | | | | | | |
| | B-12 | | | | | | | | | | | | | | | | | |
| | B-13 | | | | | | | | | | | | | | | | | |
| | B-14 | | | | | | | | | | | | | | | | | |
| | B-15 | | | | | | | | | | | | | | | | | |
| | B-16 | | | | | | | | | | | | | | | | | |
| Carbon nanotube dispersion liquid (B) | B-17 | | | | | | | | | | | | | | | | | |
| | B-18 | | | | | | | | | | | | | | | | | |
| | B-19 | | | | | | | | | | | | | | | | | |
| | B-20 | | | | | | | | | | | | | | | | | |
| | B-21 | | | | | | | | | | | | | | | | | |
| | B-22 | | | | | | | | | | | | | | | | | |
| | B-23 | | | | | | | | | | | | | | | | | |
| | B-24 | | | | | | | | | | | | | | | | | |
| | B-25 | | | | | | | | | | | | | | | | | |
| | B-26 | | | | | | | | | | | | | | | | | |
| | B-27 | | | | | | | | | | | | | | | | | |
| | B-28 | | | | | | | | | | | | | | | | | |
| | B-29 | | | | | | | | | | | | | | | | | |
| | B-30 | | | | | | | | | | | | | | | | | |
| | B-31 | | | | | | | | | | | | | | | | | |
| | B-32 | | | | | | | | | | | | | | | | | |
| | B-33 | | | | | | | | | | | | | | | | | |
| Titanium oxide (C) | R706 | | | 150 | 150 | 150 | 150 | 150 | 150 | 150 | 130 | 170 | 150 | 150 | 150 | 150 | 150 | 150 |
| | JR806 | | | | | | | | | | | | | | | | | |
| Conductive titanium oxide | | | | | | | | | | | | | | | | | | |
| Conductive mica | | | | | | | | | | | | | | | | | | |
| Ionic liquid | | | | | | | | | | | | | | | | | | |
| Whiteness | | | | A | A | A | A | A | A | A | A | B | A | A | A | A | A | A |
| Surface resistivity | | | | A | A | A | A | A | A | A | B | A | A | A | A | A | A | A |
| Weather resistance | | | | B | B | B | B | B | B | B | B | B | B | B | B | B | B | B |

**Table 4**

| | | | | | Example | | | | | | | | | | | | | |
|---|---|---|---|---|---|---|---|---|---|---|---|---|---|---|---|---|---|---|
| | | | | | 16 | 17 | 18 | 19 | 20 | 21 | 22 | 23 | 24 | 25 | 26 | 27 | 28 | 29 |
| Binder component (A) | Base resin | Acrylic resin (A1) | | Acrylic resin (A11-1) | 20 | 20 | 20 | 20 | 20 | 20 | 20 | 20 | 20 | 20 | 20 | 20 | 20 | 20 |
| | | | | Acrylic resin (A12-1) | | | | | | | | | | | | | | |
| | | Polyester resin | | | 20 | 20 | 20 | 20 | 20 | 20 | 20 | 20 | 20 | 20 | 20 | 20 | 20 | 20 |
| | Polyolefin resin (A2) | | | Polyolefin resin (A2-1) | 25 | 25 | 25 | 25 | 25 | 25 | 25 | 25 | 25 | 25 | 25 | 25 | 25 | 25 |
| | | | | Polyolefin resin (A2-2) | | | | | | | | | | | | | | |
| | Crosslinking agent | | Blocked polyisocyanate compound | | 20 | 20 | 20 | 20 | 20 | 20 | 20 | 20 | 20 | 20 | 20 | 20 | 20 | 20 |
| | | | Melamine resin | | 15 | 15 | 15 | 15 | 15 | 15 | 15 | 15 | 15 | 15 | 15 | 15 | 15 | 15 |
| | B-1 | | | | | | | | | | | | | | | | | |
| | B-2 | | | | | | | | | | | | | | | | | |
| | B-3 | | | | | | | | | | | | | | | | | |
| | B-4 | | | | | | | | | | | | | | | | | |
| | B-5 | | | | | | | | | | | | | | | | | |
| | B-6 | | | | | | | | | | | | | | | | | |
| | B-7 | | | | | | | | | | | | | | 0.1 | 0.1 | 0.1 | 0.1 |
| | B-8 | | | | 0.1 | | | | | | | | | | | | | |
| | B-9 | | | | | 0.1 | | | | | | | | | | | | |
| | B-10 | | | | | | 0.1 | | | | | | | | | | | |
| | B-11 | | | | | | | 0.1 | | | | | | | | | | |
| | B-12 | | | | | | | | 0.1 | | | | | | | | | |
| | B-13 | | | | | | | | | 0.1 | | | | | | | | |
| | B-14 | | | | | | | | | | 0.1 | | | | | | | |
| | B-15 | | | | | | | | | | | 0.1 | | | | | | |
| | B-16 | | | | | | | | | | | | 0.1 | | | | | |
| Carbon nanotube dispersion liquid (B) | B-17 | | | | | | | | | | | | | 0.1 | | | | |
| | B-18 | | | | | | | | | | | | | | | | | |
| | B-19 | | | | | | | | | | | | | | | | | |
| | B-20 | | | | | | | | | | | | | | | | | |
| | B-21 | | | | | | | | | | | | | | | | | |
| | B-22 | | | | | | | | | | | | | | | | | |
| | B-23 | | | | | | | | | | | | | | | | | |
| | B-24 | | | | | | | | | | | | | | | | | |
| | B-25 | | | | | | | | | | | | | | | | | |
| | B-26 | | | | | | | | | | | | | | | | | |
| | B-27 | | | | | | | | | | | | | | | | | |
| | B-28 | | | | | | | | | | | | | | | | | |
| | B-29 | | | | | | | | | | | | | | | | | |
| | B-30 | | | | | | | | | | | | | | | | | |
| | B-31 | | | | | | | | | | | | | | | | | |
| | B-32 | | | | | | | | | | | | | | | | | |
| | B-33 | | | | | | | | | | | | | | | | | |
| Titanium oxide (C) | R706 | | | | 150 | 150 | 150 | 150 | 150 | 150 | 150 | 150 | 150 | 150 | | 150 | 150 | 150 |
| | JR806 | | | | | | | | | | | | | | 150 | | | |
| Conductive titanium oxide | | | | | | | | | | | | | | | | 5 | | |
| Conductive mica | | | | | | | | | | | | | | | | | 5 | |
| Ionic liquid | | | | | | | | | | | | | | | | | | 5 |
| Whiteness | | | | | A | A | A | A | A | A | A | A | A | A | A | A | A | A |
| Surface resistivity | | | | | B | A | B | B | A | A | A | B | A | A | A | A | A | A |
| Weather resistance | | | | | B | B | B | B | B | B | B | B | B | B | B | B | B | B |

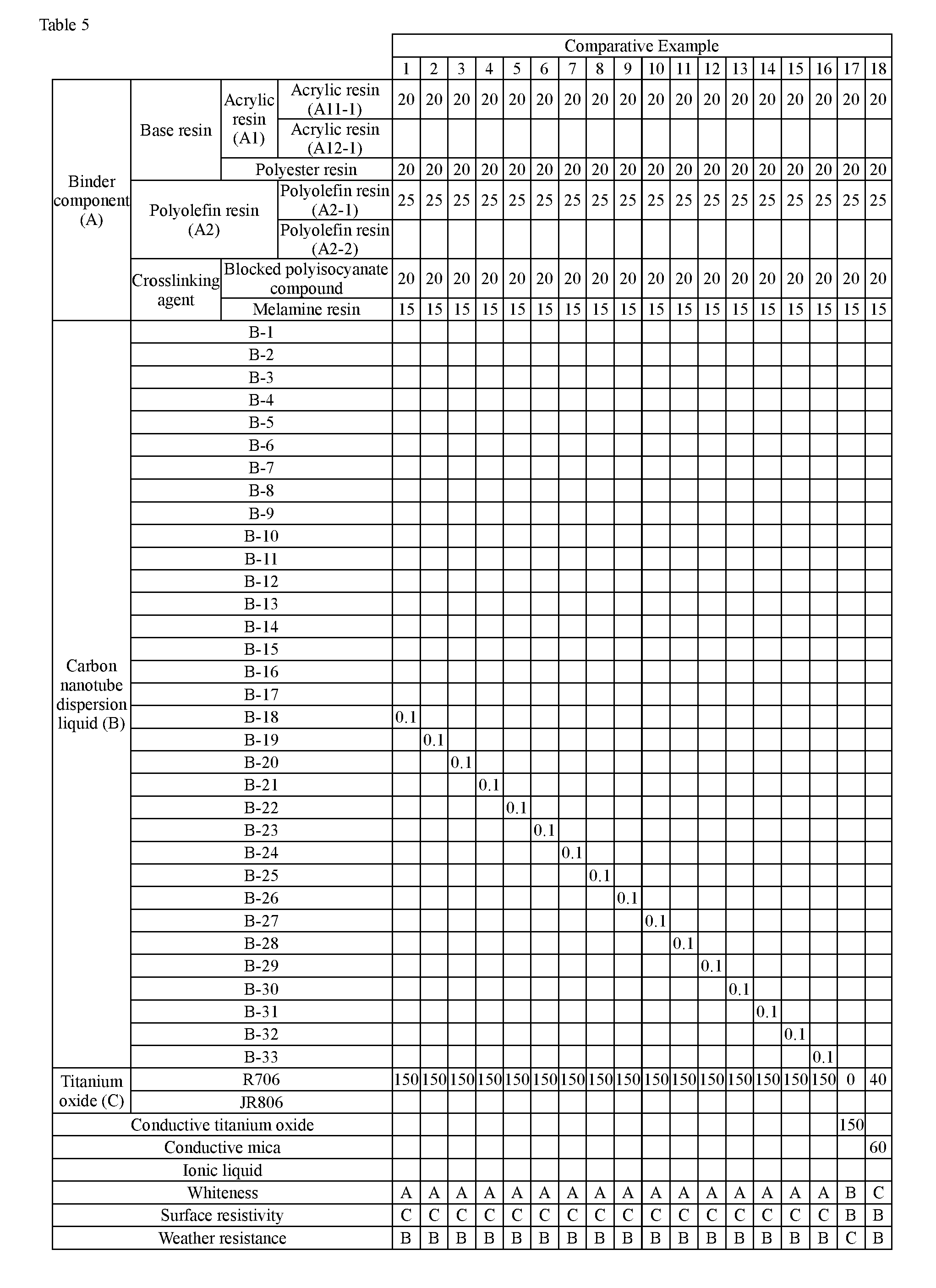

As shown in Tables 3 to 5, it was found that Examples using the aqueous white conductive primer coating composition of the present invention can form a coating film having high brightness and excellent conductivity on a plastic substrate as compared with Comparative Examples.

Although the present application is described in detail with reference to the specific embodiment, it will be apparent to those skilled in the art that various changes and modifications can be made without departing from the spirit and scope of the present invention.

The present application is based on Japanese Patent Application No. 2019-172015 filed on September 20, 2019, the contents of which are incorporated herein by reference.

## Claims

1. An aqueous white conductive primer coating composition, comprising:
a binder component (A); and
a carbon nanotube dispersion liquid (B),
a titanium oxide pigment (C)
wherein a coating film formed by the aqueous white conductive primer coating composition has an L* value of whiteness based on a CIE color-matching function of 80 or more and a surface resistivity of 10⁸ Ω/□ or less,
the binder component (A) contains at least one selected from an acrylic resin (A1) and a polyolefin resin (A2), and
a content of the titanium oxide pigment (C) is in a range of 50 to 250 parts by mass based on 100 parts by mass of a solid content of the binder component (A).

2. The aqueous white conductive primer coating composition according to claim 1, wherein the acrylic resin (A1) is an acrylic resin (A11) which is obtained by polymerizing a polymerizable unsaturated monomer and which contains 10 to 50 parts by mass of isobomyl(meth)acrylate based on 100 parts by mass of the polymerizable unsaturated monomer.

3. The aqueous white conductive primer coating composition according to claim 1 or 2, wherein the polyolefin resin (A2) is a polyolefin resin (A21) having a weight average molecular weight in a range of 50,000 to 150,000.

4. The aqueous white conductive primer coating composition according to any one of claims 1 to 3, wherein the carbon nanotube dispersion liquid (B) is a carbon nanotube dispersion liquid (B1) satisfying the following (1) to (4):
(1) the carbon nanotube dispersion liquid (B1) contains a carbon nanotube (a), a water-soluble resin (b) and water;
(2) the carbon nanotube (a) is a single-walled carbon nanotube, and has an average outer diameter of 0.5 nm to 5 nm and a specific surface area of 400 m²/g to 800 m²/g in image analysis using a transmission electron microscope;
(3) the water-soluble resin (b) is contained in an amount of 400 parts by mass or more and 2000 parts by mass or less based on 100 parts by mass of a carbon component of the carbon nanotube (a); and
(4) the carbon nanotube dispersion liquid has a 50% particle diameter (D50 diameter) of 1.5 µm to 40 µm as calculated by laser diffraction particle size distribution

5. A method for forming a multilayer coating film, the method comprising the following steps (1) to (4):
(1) coating a plastic substrate with the aqueous white conductive primer coating composition according to any one of claims 1 to 4 to form an uncured white conductive primer layer;
(2) electrostatically coating the white conductive primer layer with an interference color base coating composition to form an uncured interference color base layer;
(3) electrostatically coating the interference color base layer with a clear coating composition to form an uncured clear layer; and
(4) simultaneously baking the coating films of three layers formed by the steps (1) to (3).

## Patentansprüche

1. Wässrige weiße leitfähige Grundierungsbeschichtungszusammensetzung, umfassend:
eine Bindemittelkomponente (A); und
eine Kohlenstoffnanoröhrendispersionsflüssigkeit (B),
ein Titanoxidpigment (C)
wobei ein Beschichtungsfilm, der durch die wässrige weiße leitfähige Grundierungsbeschichtungszusammensetzung ausgebildet wird, einen L*-Wert von Weiße basierend auf einer CIE-Farbanpassungsfunktion von 80 oder mehr und einen Oberflächenwiderstand von 10⁸ Ω/□ oder weniger aufweist,
die Bindemittelkomponente (A) mindestens eines enthält ausgewählt aus einem Acrylharz (A1) und einem Polyolefinharz (A2), und
ein Gehalt des Titanoxidpigments (C) in einem Bereich von 50 bis 250 Massenteilen, basierend auf 100 Massenteilen eines Feststoffgehalts der Bindemittelkomponente (A), liegt.

2. Wässrige weiße leitfähige Grundierungsbeschichtungszusammensetzung nach Anspruch 1, wobei das Acrylharz (A1) ein Acrylharz (A11) ist, das durch Polymerisieren eines polymerisierbaren ungesättigten Monomers erhalten wird und das zu 10 bis 50 Massenteilen Isobornyl(meth)acrylat, basierend auf 100 Massenteilen des polymerisierbaren ungesättigten Monomers, enthält.

3. Wässrige weiße leitfähige Grundierungsbeschichtungszusammensetzung nach Anspruch 1 oder 2, wobei das Polyolefinharz (A2) ein Polyolefinharz (A21) ist, das ein gewichtsdurchschnittliches Molekulargewicht in einem Bereich von 50.000 bis 150.000 aufweist.

4. Wässrige, weiße, leitfähige Grundierungsbeschichtungszusammensetzung nach einem der Ansprüche 1 bis 3, wobei die Kohlenstoffnanoröhrendispersionsflüssigkeit (B) eine Kohlenstoffnanoröhrendispersionsflüssigkeit (B1) ist, die die folgenden (1) bis (4) erfüllt:
(1) die Kohlenstoffnanoröhrendispersionsflüssigkeit (B1) enthält eine Kohlenstoffnanoröhre (a), ein wasserlösliches Harz (b) und Wasser;
(2) die Kohlenstoffnanoröhre (a) eine einwandige Kohlenstoffnanoröhre ist und einen durchschnittlichen Außendurchmesser von 0,5 nm bis 5 nm und eine spezifische Oberfläche von 400 m²/g bis 800 m²/g bei einer Bildanalyse unter Verwendung eines Transmissionselektronenmikroskops aufweist;
(3) das wasserlösliche Harz (b) in einer Menge von 400 Massenteilen oder mehr und 2000 Massenteilen oder weniger, basierend auf 100 Massenteile einer Kohlenstoffkomponente der Kohlenstoffnanoröhre (a), enthalten ist; und
(4) die Kohlenstoffnanoröhrendispersionsflüssigkeit einen 50%-Partikeldurchmesser (D50-Durchmesser) von 1,5 µm bis 40 µm aufweist, wie durch eine Messung der Partikelgrößenverteilung mittels Laserbeugung berechnet.

5. Verfahren zum Ausbilden eines mehrschichtigen Beschichtungsfilms, das Verfahren umfassend die folgenden Schritte (1) bis (4):
(1) Beschichten eines Kunststoffsubstrats mit der wässrigen weißen leitfähigen Grundierungsbeschichtungszusammensetzung nach einem der Ansprüche 1 bis 4, um eine ungehärtete weiße leitfähige Grundierungsschicht auszubilden;
(2) elektrostatisches Beschichten der weißen leitfähigen Grundierungsschicht mit einer Interferenzfarbgrundbeschichtungszusammensetzung, um eine ungehärtete Interferenzfarbgrundschicht auszubilden;
(3) elektrostatisches Beschichten der Interferenzfarbgrundschicht mit einer klaren Beschichtungszusammensetzung, um eine ungehärtete klare Schicht auszubilden; und
(4) gleichzeitiges Einbrennen der Beschichtungsfilme aus drei Schichten, die durch die Schritte (1) bis (3) ausgebildet sind.

## Revendications

1. Composition aqueuse de revêtement d'apprêt conducteur blanc comprenant :
un composant liant (A) ; et
un liquide en dispersion de nanotubes de carbone (B),
un pigment à base d'oxyde de titane (C)
dans laquelle un film de revêtement formé par la composition aqueuse de revêtement d'apprêt conducteur blanc a une valeur de blancheur L*, basée sur la fonction colorimétrique CIE, de 80 ou plus, et une résistivité en surface de 10⁸Ω/□ ou moins,
le composant liant (A) contient au moins l'une choisie parmi une résine acrylique (A1) et une résine de polyoléfine (A2), et
la teneur en le pigment à base d'oxyde de titane (C) est située dans la plage allant de 50 à 250 parties en masse pour 100 parties en masse de la teneur en solides du composant liant (A).

2. Composition aqueuse de revêtement d'apprêt conducteur blanc selon la revendication 1, dans laquelle la résine acrylique (A1) est une résine acrylique (A11) qui est obtenue par polymérisation d'un monomère insaturé polymérisable et qui contient 10 à 50 parties en masse de (méth)acrylate d'isobornyle pour 100 parties en masse du monomère insaturé polymérisable.

3. Composition aqueuse de revêtement d'apprêt conducteur blanc selon la revendication 1 ou 2, dans laquelle la résine de polyoléfine (A2) est une résine de polyoléfine (A21) ayant une masse moléculaire moyenne en poids située dans la plage allant de 50 000 à 150 000.

4. Composition aqueuse de revêtement d'apprêt conducteur blanc selon l'une quelconque des revendications 1 à 3, dans laquelle le liquide en dispersion de nanotubes de carbone (B) est un liquide en dispersion de nanotubes de carbone (B1) satisfaisant aux points (1) à (4) suivants :
(1) le liquide en dispersion de nanotubes de carbone (B1) contient des nanotubes de carbone (a), une résine soluble dans l'eau (b) et de l'eau ;
(2) les nanotubes de carbone (a) sont des nanotubes de carbone monoparois, et ont un diamètre extérieur moyen de 0,5 nm à 5 nm et une surface spécifique de 400 m²/g à 800 m²/g dans une analyse d'image utilisant un microscope électronique à transmission ;
(3) la résine soluble dans l'eau (b) est contenue en une quantité de 400 parties en masse ou plus et 2 000 parties en masse ou moins pour 100 parties en masse des composants carbonés des nanotubes de carbone (a) ; et
(4) le liquide en dispersion de nanotubes de carbone a une granulométrie à 50 % (diamètre D50) de 1,5 µm à 40 µm telle que calculée par mesure de distribution de granulométrie par diffraction de laser.

5. Procédé pour former un film de revêtement multicouche, le procédé comprenant les étapes (1) à (4) suivantes :
(1) revêtement d'un substrat plastique avec la composition aqueuse de revêtement d'apprêt conducteur blanc de l'une quelconque des revendications 1 à 4 pour former une couche d'apprêt conducteur blanc non durcie ;
(2) revêtement électrostatique de la couche d'apprêt conducteur blanc avec une composition de revêtement de base à couleur interférentielle pour former une couche de base à couleur interférentielle non durcie ;
(3) revêtement électrostatique de la couche de base à couleur interférentielle avec une composition de revêtement transparente pour former une couche transparente non durcie ; et
(4) cuisson simultanée des films de revêtement de trois couches formées par les étapes (1) à (3).
